# EUROPEAN PATENT APPLICATION

(11) **EP 4 752 505 A1**
(43) Date of publication of application: **03.06.2026**
(21) Application number: 25218710.9
(22) Date of filing: 26.11.2025
(51) Int. Cl.: G01C 21/30

(54) **METHOD, APPARATUS, AND SYSTEM OF MATCHING TO A DIRECTED GRAPH REPRESENTATION OF LANES OF A ROAD TOPOLOGY NETWORK IN A DIGITAL MAP**

(30) Priority: 29.11.2024 US 202418963796
(71) Applicant: HERE Global B.V., 5611 ZT Eindhoven (NL)
(72) Inventor: Mao, Qi, Texas, 76015 (US); Raggi, Roberto, 10115 Berlin (DE)
(74) Representative: Potter Clarkson

(57) **Abstract**

An approach is provided for matching to directed graph representation of lanes of a road topology network of a digital map. The approach, for instance, involves determining a plurality of lane group centerlines respectively representing a plurality of lane groups of a road network in a geographic database. The approach also involves for each lane group centerline of the plurality of lane group centerlines, determining one or more edges having a pair of node identifiers. The approach further involves inserting the one or more edges and the pair of node identifiers into a lane group routing graph, wherein the lane group routing graph is a directed graph. The approach further involves matching an input directed graph to the lane group routing graph, wherein the input directed graph represents a set of trajectories, and providing a map matching result based on the matching.

## Description

### BACKGROUND

Map matching is a process of aligning raw vehicle trajectory or path data, such as Global Positioning System (GPS) traces, to a road topology network in digital map data. This map matching process is an important starting point for a myriad of location-based services and applications because of the inherent inaccuracies and noise present in the raw trajectory (e.g., resulting from GPS or other positioning error). In addition, the digital map data itself can be potentially inaccurate, out of date, or complex, making accurate map matching technically challenging, particularly when map matching to specific lanes of a road network.

### SOME EXAMPLE EMBODIMENTS

Therefore, there is a need for an approach for matching a vehicle path or trajectory to lanes of a road topology network in a digital map.

According to one embodiment, a method comprises determining a plurality of lane group centerlines respectively representing a plurality of lane groups of a road network in a geographic database. The method also comprises, for each lane group centerline of the plurality of lane group centerlines, determining one or more edges having a pair of node identifiers. The method further comprises inserting the one or more edges and the pair of node identifiers into a lane group routing graph. For example, the lane group routing graph is a directed graph. The method further comprises matching an input directed graph to the lane group routing graph. For example, the input directed graph represents a set of trajectories. The method further comprises providing a map matching result based on the matching.

According to another embodiment, an apparatus comprises at least one processor, and at least one memory including computer program code for one or more computer programs, the at least one memory and the computer program code configured to, with the at least one processor, cause, at least in part, the apparatus to determine a plurality of lane group centerlines respectively representing a plurality of lane groups of a road network in a geographic database. The apparatus is also caused, for each lane group centerline of the plurality of lane group centerlines, to determine one or more edges having a pair of node identifiers. The apparatus is further caused to insert the one or more edges and the pair of node identifiers into a lane group routing graph. For example, the lane group routing graph is a directed graph. The apparatus is further caused to match an input directed graph to the lane group routing graph. For example, the input directed graph represents a set of trajectories. The apparatus is further caused to provide a map matching result based on the matching.

According to another embodiment, a non-transitory computer-readable storage medium carries one or more sequences of one or more instructions which, when executed by one or more processors, cause, at least in part, an apparatus to determine a plurality of lane group centerlines respectively representing a plurality of lane groups of a road network in a geographic database. The apparatus is also caused, for each lane group centerline of the plurality of lane group centerlines, to determine one or more edges having a pair of node identifiers. The apparatus is further caused to insert the one or more edges and the pair of node identifiers into a lane group routing graph. For example, the lane group routing graph is a directed graph. The apparatus is further caused to match an input directed graph to the lane group routing graph. For example, the input directed graph represents a set of trajectories. The apparatus is further caused to provide a map matching result based on the matching.

According to another embodiment, an apparatus comprises means for determining a plurality of lane group centerlines respectively representing a plurality of lane groups of a road network in a geographic database. The apparatus also comprises means for, for each lane group centerline of the plurality of lane group centerlines, determining one or more edges having a pair of node identifiers. The apparatus further comprises means for inserting the one or more edges and the pair of node identifiers into a lane group routing graph. For example, the lane group routing graph is a directed graph. The apparatus further comprises means for matching an input directed graph to the lane group routing graph. For example, the input directed graph represents a set of trajectories. The apparatus is further comprises means for providing a map matching result based on the matching.
The following numbered paragraphs are provided:
1. A method comprising:
   determining a plurality of lane group centerlines respectively representing a plurality of lane groups of a road network in a geographic database;
   for each lane group centerline of the plurality of lane group centerlines, determining one or more edges having a pair of node identifiers;
   inserting the one or more edges and the pair of node identifiers into a lane group routing graph, wherein the lane group routing graph is a directed graph;
   matching an input directed graph to the lane group routing graph, wherein the input directed graph represents a set of trajectories; and
   providing a map matching result based on the matching.
2. The method of paragraph 1, further comprising:
   determining that at least one node identifier of the pair of node identifiers is shared by at least one connected lane group centerline that has been previously processed and inserted in the lane group routing graph; and
   reusing the at least one node identifier.
3. The method of paragraph 1, further comprising:
   determining one or more edge directions of the one or more edges based on direction of travel data of each lane group centerline.
4. The method of paragraph 1, further comprising:
   for each edge of the one or more edges, determining that a lane group of the plurality of lane groups corresponding to said each edge has lanes in both directions; and
   inserting two virtual nodes and two virtual edges in the lane group routing graph to distinguish routing from either direction of both directions based on determining that a start node identifier and an end node identifier of said each edge are the same.
5. The method of paragraph 1, further comprising:
   for each edge of the one or more edges, determining that said each edge exists in the lane group routing graph; and
   adding a virtual node and a virtual edge to said each edge in the lane group routing graph to distinguish routing from multiple edges.
6. The method of paragraph 1, wherein the plurality of lane group centerlines are represented in the geographic database as a plurality of respective lane group boundary polygons, the method further comprising:
   for each lane group boundary polygon of the plurality of respective lane group polygons, determining a closing segment of said each lane group boundary polygon, wherein the closing segment does not connect to another lane group boundary polygon; and an opening segment of said each lane group boundary, wherein the opening segment is a connecting geometry with another lane group boundary polygon and allows traffic from one lane group to another lane group.
7. The method of paragraph 6, further comprising: for the opening segment, determining a start point and a direction of growth, wherein a center point of the opening segment is used as the start point, and wherein the growth direction is from the start point to an inner of said each lane group boundary polygon.
8. The method of paragraph 7, further comprising:
   determining an extended point from the start point along the direction of growth with a stepwise tunable parameter;
   determining a line on the extended point perpendicular to the direction of growth;
   determining a truncated segment of the line truncated by the closing segment and/or another closing segment;
   updating the start point as another center point of the truncated segment;
   updating the direction of growth from a previous start point to a current start point; and
   repeating until a last growth segment intersects another opening segment.
9. The method of paragraph 1, wherein the matching comprises:
   matching a trajectory of the set of trajectories to the lane group routing graph to determine a sequence of lane group centerlines represented in the lane group routing corresponding to the trajectory; and
   applying one or more hard constraints to matching the trajectory.
10. The method of paragraph 9, wherein the one or more hard constraints include designating a transition in the sequence of lane group centerlines as infeasible if the sequence of lane group centerlines includes a sharp angle that is less than a threshold angle.
11. The method of paragraph 9, wherein the one or more hard constraints include eliminating a path in the sequence of lane group centerlines with a route distance that is greater than a direct distance by more than a threshold factor.
12. The method of paragraph 9, wherein the one or more hard constraints include eliminating a path in the sequence of lane group centerlines with a route shape that deviates from a straight line of projected points by more than a threshold value.
13. The method of paragraph 9, wherein the one or more hard constraints include eliminating one or more U-turn artifacts for any three consecutive matching points in the sequence of lane group centerlines.
14. The method of paragraph 1,
   wherein the matching comprises extending each edge of the directed graph, and
   wherein the matching results are provided only for an unextend portion of said each edge.
15. The method of paragraph 1, wherein the matching comprises storing multiple matches from the matching as a directed acyclic graph.
16. The method of paragraph 15, wherein the providing comprises:
   extracting a plurality of possible lane group sequences from the directed acyclic graph;
   for each lane group sequence of the plurality of possible lane group sequences and for each lane group in the said each lane group sequence, determining one or more intersecting ranges and one or more non-intersecting ranges;
   for the one or more non-intersecting ranges that are shorter than a threshold length, merging the one or more non-intersecting ranges with a previous intersecting range; and
   for each non-intersecting range of the one or more intersecting ranges, inferring its interpolated lane group sequences, orientations, possible lanes, or a combination thereof based on lane group matches; and
   providing the map matching result including the one or more intersecting ranges, the one or more non-intersecting ranges, or a combination thereof.
17. The method of paragraph 15, wherein one or more virtual nodes for partial off-road matches are inserted into the directed acyclic graph to make a transition from empty matches to other matches or from other matches to empty matches feasible.
18. An apparatus comprising:
   at least one processor; and
   at least one memory including computer program code for one or more programs,
   the at least one memory and the computer program code configured to, with the at least one processor, cause the apparatus to:
      determine a plurality of lane group centerlines respectively representing a plurality of lane groups of a road network in a geographic database;
      for each lane group centerline of the plurality of lane group centerlines, determine one or more edges having a pair of node identifiers;
      insert the one or more edges and the pair of node identifiers into a lane group routing graph, wherein the lane group routing graph is a directed graph;
      match an input directed graph to the lane group routing graph, wherein the input directed graph represents a set of trajectories; and
      provide a map matching result based on the matching.
19. The apparatus of paragraph 18, wherein the apparatus is further caused to:
   determine that at least one node identifier of the pair of node identifiers is shared by at least one connected lane group centerline that has been previously processed and inserted in the lane group routing graph; and
   reuse the at least one node identifier.
20. A non-transitory computer-readable storage medium, carrying one or more sequences of one or more instructions which, when executed by one or more processors, cause an apparatus to perform:
   determining a plurality of lane group centerlines respectively representing a plurality of lane groups of a road network in a geographic database;
   for each lane group centerline of the plurality of lane group centerlines, determining one or more edges having a pair of node identifiers;
   inserting the one or more edges and the pair of node identifiers into a lane group routing graph, wherein the lane group routing graph is a directed graph; and
   match an input directed graph to the lane group routing graph, wherein the input directed graph represents a set of trajectories; and
   provide a map matching result based on the matching.

In addition, for various example embodiments described herein, the following is applicable: a computer program product may be provided. For example, a computer program product comprising instructions which, when the program is executed by a computer, cause the computer to perform any one or any combination of methods (or processes) disclosed.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of matching a directed graph representation of vehicle paths to lanes of a road topology network in a digital map, according to one example embodiment;
FIG. 2 is a diagram illustrating an example of representing vehicle trajectory data as a directed graph of linear features, according to one example embodiment;
FIG. 3 is a diagram illustrating multiple possible matches between a vehicle path feature and multiple lane group centerlines, according to one example embodiment;
FIG. 4 is a diagram illustrating partially off-road matches caused by missing lane groups, according to one example embodiment;
FIG. 5 is a diagram of components of a mapping platform capable of matching to lanes of a road topology network in a digital map, according to one example embodiment;
FIG. 6 is flowchart of a process for constructing a lane group routing graph for matching to lanes of a road topology network in a digital map, according to one example embodiment;
FIG. 7 is a flowchart of a process for automatically extracting lane group centerlines from lane groups, according to one example embodiment;
FIG. 8 is a diagram illustrating an example of lane group centerline generation, according to one example embodiment;
FIG. 9 is a flowchart of a process for matching a trajectory input to a lane group routing graph, according to one example embodiment;
FIGs. 10A and 10B are diagrams of an example of excluding a sharp V-turn, according to one example embodiment;
FIG. 11 is a flowchart of a process for matching a directed graph input to a lane group routing graph, according to one example embodiment;
FIG. 12 is a diagram illustrating an example of a directed acyclic graph aggregated from multiple matches, according to one example embodiment;
FIG. 13 is a flowchart of a process for associating lanes using lane group matches based on a directed acyclic graph, according to one example embodiment;
FIG. 14 is a diagram illustrating an example of a self-intersecting vehicle path feature, according to one example embodiment;
FIG. 15 is diagram illustrating an example of providing compatible orientation of lane group, according to one example embodiment;
FIG. 16 is diagram illustrating an example of on-lane and off-lane match ranges, according to one example embodiment;
FIG. 17 is diagram illustrating an example of multiple matches, according to one example embodiment;
FIG. 18 is flowchart of a process for using edge extension to match to lanes of a road topology network in a digital map, according to one example embodiment;
FIG. 19 is a diagram illustrating an example of extending a linear feature of a directed graph for matching to a lane group routing graph, according to one example embodiment;
FIG. 20 is a diagram of a geographic database, according to one embodiment;
FIG. 21 is a diagram of hardware that can be used to implement an embodiment of the invention;
FIG. 22 is a diagram of a chip set that can be used to implement an embodiment of the invention; and
FIG. 23 is a diagram of a mobile terminal that can be used to implement an embodiment of the invention.

### DESCRIPTION OF SOME EMBODIMENTS

Examples of a method, apparatus, and computer program for matching to lanes of a road topology network in a digital map are disclosed, according to various example embodiments. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. In addition, the embodiments described herein are provided by example, and as such, "one embodiment" can also be used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

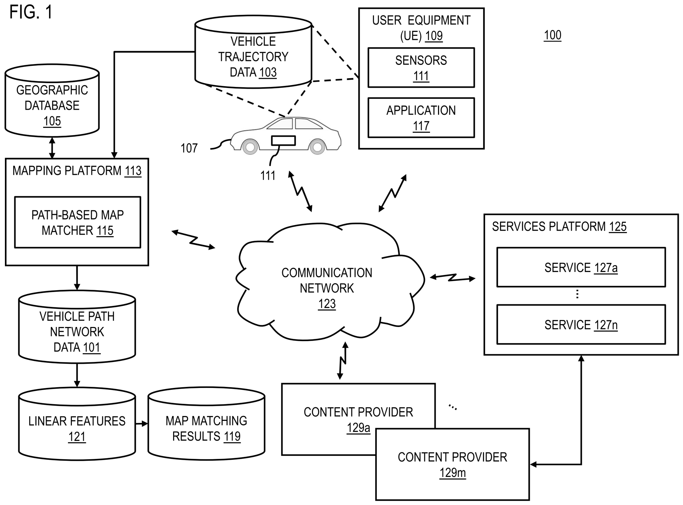

FIG. 1 is a diagram of a system 100 capable of matching (e.g., a directed graph representation of a vehicle path such as a vehicle path network data 101 or vehicle trajectory data 103) to lanes of a road topology network in a digital map (e.g., digital map data of a geographic database 105), according to one example embodiment. As used herein, a vehicle path (VP) network is an aggregated representation of multiple drive paths (e.g., vehicle trajectory data 103) collected from vehicles 107 and/or user equipment (UE) devices 109 equipped with respective sensors 111 (e.g., positioning sensors such as GPS, Global Navigation Satellite System (GNSS), wireless signal triangulation, visual odometry, and/or the like) as they travel over a road network. By way of example, vehicle trajectory data 103 is a type of data that records the location, direction, speed, and/or time of a vehicle as it moves over a road network. Some examples of vehicle trajectory data include but are not limited to: (1) a sequence of latitude and longitude coordinates that indicate the position of a vehicle at different timestamps; (2) a polyline that shows the shape and direction of a vehicle path on a map; (3) a set of attributes that describe the speed, duration, frequency, or events of a vehicle movement along a path; and/or (4) any other equivalent data.

In one embodiment, the aggregated representation of vehicle paths (e.g., vehicle path network data 101) is in the form of a directed graph, in which every path from one node to another node on the network can be a valid drive path with specified driving directions. More specifically, a directed graph representation of vehicle paths is a way of modeling the movement of a vehicle 107 (or associated UE 109) using a set of nodes and edges. A node is a point that represents a location along the vehicle path. An edge is a line that connects two nodes and represents the direction and distance of the movement between the two nodes (also referred to herein as a linear feature of the directed graph). A directed graph can capture the shape and the sequence of the vehicle path, as well as various attributes such as but not limited to speed, duration, frequency, etc.

A directed graph can also be used to aggregate multiple vehicle trajectories into a vehicle path network, which can show the common patterns and variations of the movements across multiple vehicles or paths. In some embodiment, the number of nodes of a directed graph can be fewer than the number of sampled location points in the vehicle trajectories, can effectively compress or reduce the number of data points for representing a vehicle path when compared to the raw trajectory data, thereby resulting in the technical advantage of reduced memory needed to store and process the data. A directed graph representation of a vehicle path can be useful for map matching because it can reduce the noise and complexity of the raw vehicle trajectory data 103 and simplify the matching process (e.g., performed by the mapping platform 113 using a path-based map matcher 115 or equivalent such as the application 117 executing on the UE 109 and/or vehicle 107).

By way of example, a path-based map matcher 115 treats a vehicle's entire trajectory as a single unit rather than analyzing individual location points (e.g., GPS points) separately to generate map matching results 119. This approach involves, for instance, generating potential paths on a digital map based on the trajectory's starting and ending points (or between any two points of the trajectory), then evaluating each path's similarity to the raw data considering factors like distance, heading, speed, and time. The path with the highest likelihood or lowest error is selected as the matched path. This method potentially can provide improved accuracy and robustness compared to point-based approaches by considering the broader context of the trajectory.

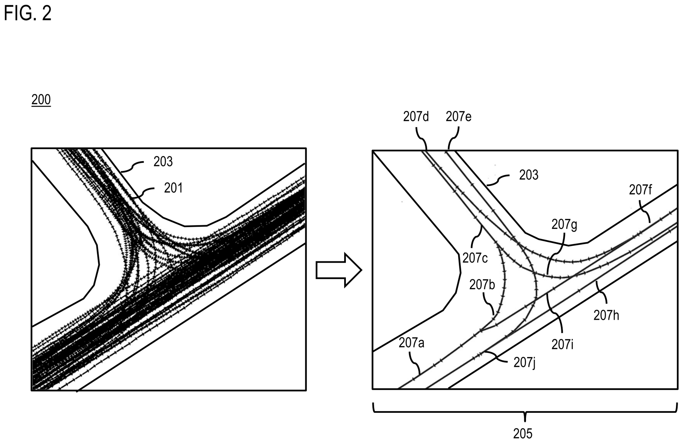

FIG. 2 is a diagram illustrating an example 200 of representing vehicle trajectory data 103 as a directed graph of linear features (e.g. vehicle path network data 101), according to one example embodiment. In the example of FIG. 2, the mapping platform 113 processes vehicle trajectory data 103 comprising drive paths 201 with driving directions in a three-way intersection 201. The vehicle trajectory data 103 in this example comprise over 200+ individual drives (e.g., sequences of time stamped locations - <latitude, longitude, time> - collected from sensors 111 of vehicles 107 and/or UEs 109 traveling through the three-way intersection 201). The mapping platform 113 aggregates the vehicle drive paths 201 (e.g., 200+ drives) to construct a VP network 205 comprising only 10 connected linear features 207a-207j. For example, to construct the VP network 205, the mapping platform 113 can discretize the continuous trajectories into a set of points of segments to create representative nodes of the directed graph of the VP network 205. The nodes can be created to represent intersections, junctions, points of interest, geographic regions, vehicle positions, etc. Edges can then be created to represent the vehicle movements between the nodes. These edges are referred to as linear features. In addition, shapepoints between the nodes can be added to more closely align the shape of the directed graph with the trajectories at locations where no node is present.

As shown in FIG. 2, the VP network 205 possesses several advantages comparing with the large amount of raw drive path 201 such as but not limited to:
(1) The VP network 205 can significantly save storage and computation because overlapping among drives are properly aggregated without data loss from a map creation viewpoint. This allows the VP network to consume infinite number of drive paths and routes, and to represent them by a directed graph with a set of finite nodes or linear features.
(2) The VP network 205 can be dynamically updated with a set of the freshest drive path data, so it makes the VP network maintenance practical.
(3) The use of the VP network 205 in place of raw vehicle paths 201 is very efficient and cost saving for drive planning since it is useful to simulate unseen drive paths without real drives associated.

However, although VP network data 101 can compress drive path data (e.g., vehicle trajectory data 103) in a simple directed graph as shown above, it makes the map matching from the VP network to a reference map very different from the classical map matching methods since the input now is a directed graph instead of a trajectory or a sequence of geolocations. Accordingly, service providers face significant technical challenges to map matching a directed graph representation of vehicle paths to digital map data. This challenge can be particularly acute when map matching to high definition (HD) lane models of the geographic database 105. HD lane models of the geographic database 105 are high-definition representations of road networks that include detailed lane-level information. These models capture precise geometries, lane boundaries, lane markings, and other critical attributes such as lane connectivity, width, and traffic rules. They are designed to support advanced driver-assistance systems (ADAS) and autonomous driving applications by providing accurate and reliable data for safe and efficient vehicle navigation.

Map matching in this scenario is especially challenging because traditional map matching methods are particularly designed for linear drive path of sequence of geolocations and do not work for an input of a directed graph. In other words, a directed graph cannot be directly used as an input to a path-based map matcher because the nodes of a directed graph are typically junctions or intersections, such that each node of the directed graph can have multiple connected linear features. This makes the directed graph an interconnection of individual linear features and is itself not linear but branched.

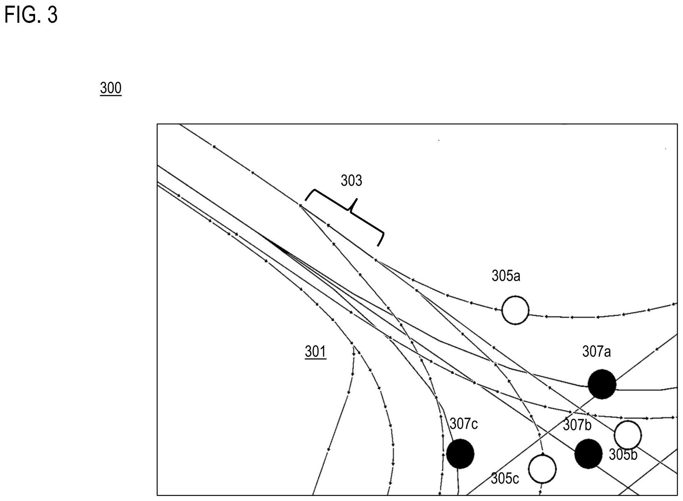

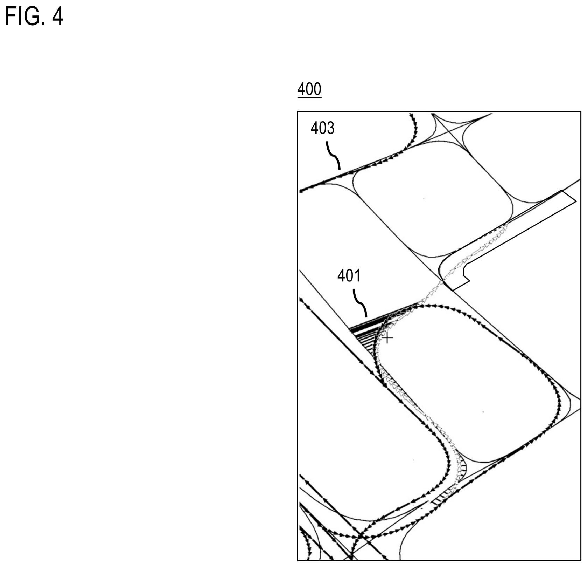

More specifically with respect to map matching of directed graphs to lanes/lane groups (LGs) in digital map data (e.g., of the geographic database 105), there are various critical challenges that cannot be easily addressed by conventional methods:
(1) Lanes are represented by polygons, while road topologies are represented by linestrings. By using polygons, the digital map can accurately convey the precise shapes and boundaries of lanes, which is critical for reliable vehicle navigation. This detailed level of representation allows for the inclusion of lane-level attributes such as lane connectivity, width, and specific traffic rules, making it possible to support safe and efficient vehicle operation. The candidate search needs to consider on-road versus off-road matches, as well as on-lane versus off-lane matches. The routing graph over lanes can be complicated due to its connectivity and overlapping of connected LGs.
(2) Multiple matches and partial off-road matches can frequently happen in lanes, but conventional map matching methods assume the unique optimal solution, so they are not suitable for the problem of lane level matching for directed graphs. For example, an input directed graph can represent a set of trajectories (e.g., the vehicle trajectory data 103) where each directed edge represents a trajectory, and its nodes represent the connections among different trajectories. To match a directed graph to the LG routing graph, multiple matches and partial off-road matches are two key challenges:
   (a) Multiple matches: one trajectory of the input directed graph can have multiple matches depending on the connections of its predecessors and successors. Enumerating all possible routes for a given input directed graph using conventional methods is expensive and impractical for hundreds of connected trajectories, let alone to match all enumerated trajectories. On the other hand, matching each individual edge will have degraded matching quality due to the missing the context of predecessors and successors. One example 300 is shown in FIG. 3. FIG. 3 is a diagram illustrating multiple possible matches between a vehicle path feature (e.g., a vehicle path feature 303) and multiple LG centerlines (e.g., LG centerlines 307a, 307b, and 307c), according to one example embodiment. In the example of FIG. 3, a vehicle path network 301 is a directed graph with branching lines with directional arrows (e.g., marked by white circles 305a-305c) where each directed edge is one VP feature. As shown, the VP feature 303 simultaneously matches to three different LG centerlines 307a, 307b, and 307c (e.g., marked by black circles) depending on its three predecessor VP features.
   (b) Partial off-road matches. For a trajectory, parts of the geolocations are off-road, while others are on-road. The partial off-road matching can happen when some LGs are missing, as shown in FIG. 4, or the input trajectory is partially off-road. FIG. 4 is a diagram illustrating partially off-road matches caused by missing LGs, according to one example embodiment. In the example 400 of FIG. 4, in the middle 401 of the trajectory 403, the LG data is missing, which cause partially off-road matches. The partial off-road matches combined with multiple matches make the LG matching challenging.
(3) The data format to store traditional matching output is no longer suitable when multiple matches and off-road matches exist. The traditional data format for storing map matching outputs, designed for linear sequences of geolocations, is unsuitable for scenarios involving multiple matches and partial off-road matches because it cannot effectively represent the complexity of directed graphs, which feature numerous interconnected paths. This format fails to capture alternative routes, leading to incomplete or ambiguous outputs, and lacks the ability to differentiate between on-road and off-road segments within the same path, a critical requirement for high precision applications like HD lane models.

To address these technical challenges, the system 100 of FIG. 1 introduces a capability to provide for the following features that can be used for matching a directed graph like VP network to lanes/lane models in HD map: (1) an innovative capability to match a directed graph to lanes models that are stored in digital map data (e.g., of the geographic database 105) in a non-graph representation such as but not limited to a lane boundary polygon; (2) a method to construct a routing graph over LG centerlines for path-based LG matching; (3) a method to automatically extract centerlines from LG boundary geometries in HD map; (4) a method to alleviate infeasible transitions and integrate hard constraints, for instance, into a Viterbi algorithm (e.g., Hidden Markov Model) to remove unwanted matches including but not limited to a sharp V-turn, U-turn artifacts, and infeasible routing on the routing graph; (5) a method to match a directed graph to the LG centerline routing graph with multiple matches and partial off-road matches; (6) a method to associate lanes using the optimal LG matches based on directed acyclic graph; and (7) multiple matching output formats support including point matches and range matches.

In summary, the system 100 provides technical solutions for the problem of matching a directed graph to lanes of a road topology network in digital map data. In one embodiment, the system 100 can provide the map matching results 119 (e.g., for individual linear features and/or an aggregated overall map matching result for the directed graph) as an output. The output, for instance, can be made accessible over a communication network 123 to a services platform 125, one or more services 127a-127n (also collectively referred to as services 127 such as but not limited to location-based services), one or more content providers 129a-129m (also referred to as content providers 129), and/or any other component of the system 100 or with access to the system 100.

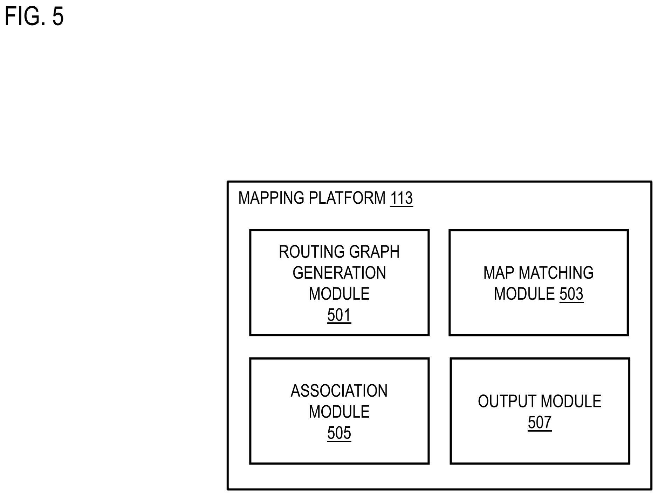

FIG. 5 is a diagram of components of a mapping platform capable of matching a directed graph representation of vehicle paths to lanes of a road topology network in a digital map, according to one example embodiment. As shown, the mapping platform 113 includes one or more components for map matching a directed graph according to the various example embodiments described herein. In one example embodiment, the mapping platform 113 includes a routing graph generation module 501, a map matching module 503, an association module 505, and an output module 507. In one example embodiment, the path-based map matcher 115 includes the routing graph generation module 501, the map matching module 503, the association module 505, and an output module 507. The above presented modules and components of the mapping platform 113 can be implemented in hardware, firmware, software, circuitry, or a combination thereof. Though depicted as a separate entity in FIG. 1, it is contemplated that the mapping platform 113 may be implemented as a module of any of the components of the system 100 (e.g., a component of the services platform 125, services 127, content providers 129, vehicle 107, UE 109, application 117, and/or the like). In another embodiment, one or more of the modules 501-507 may be implemented as a cloud-based service, local service, native application, circuitry, or combination thereof. The functions of the mapping platform 113 and modules 501-507 are discussed with respect to the figures discussed below.

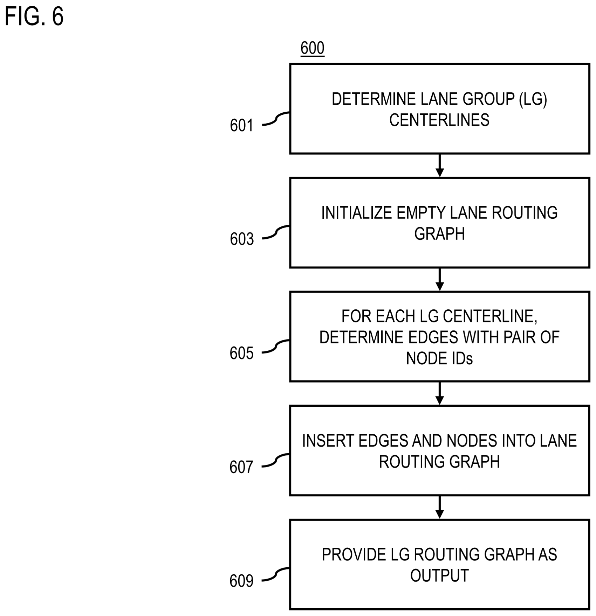

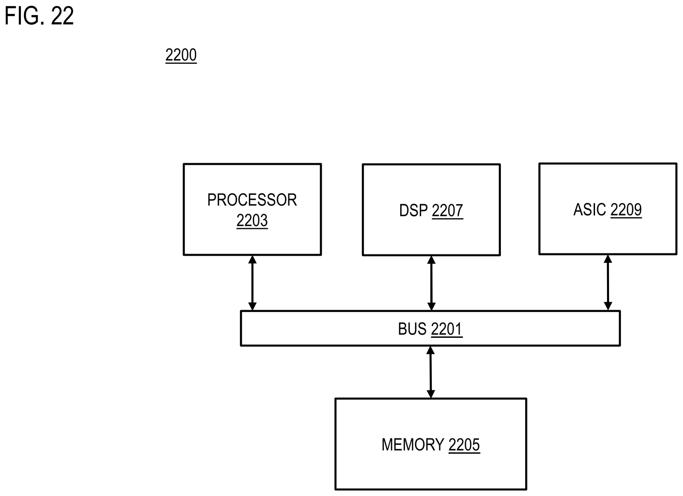

FIG. 6 is flowchart of a process 600 for constructing a LG routing graph for matching to lanes of a road topology network in a digital map, according to one example embodiment. In various embodiments, the mapping platform 113 and/or any of the modules 501-507 may perform one or more portions of the process 600 and may be implemented in, for instance, a chip set including a processor and a memory as shown in FIG. 22. As such, the mapping platform 113 and/or any of the modules 501-507 can provide means for accomplishing various parts of the process 600, as well as means for accomplishing embodiments of other processes described herein in conjunction with other components of the system 100. Although the process 600 is illustrated and described as a sequence of steps, it is contemplated that various embodiments of the process 600 may be performed in any order or combination and need not include all of the illustrated steps.

In one embodiment, given LG data, a routing graph over LG centerlines is first built, and each trajectory is then matched to the routing graph so that the optimal LG sequence is identified by hidden Markov model with some important modifications. The lane association is finally performed based on the optimal LG sequence. The various embodiments of the process 600 provide a method to construct a routing graph over LG centerlines. LG data, for instance, consist of LG polygons and their connections. Each LG contains multiple lanes, and each lane can have only one direction of travel (DoT). Instead of using LG polygons, the LG routing graph introduced herein is built on LG centerlines. By way of example, an LG centerline is a central reference line representing the linear path within an LG on a road network. The LG centerlines can either be provided by the LG data or could be automatically extracted from LG polygons by centerline extraction methods. According to the connections among LGs, the connections of LG centerlines are naturally defined.

As used herein, a routing graph is a structured representation used to map the optimal paths within a road network. In the various embodiments described herein, the LG routing graph represents the possible paths with the road network at the lane level and is constructed as follows.

In step 601, the routing graph generation module 501 extracts or constructs LG centerlines from LG polygons (e.g., a mapped and stored in the geographic database 105). In other words, the routing graph generation module 501 determines a plurality of LG centerlines respectively representing a plurality of LGs of a road network in a geographic database 105. If the geographic database 105 includes or otherwise stores map data representing the LG centerlines, the routing graph generation module 501 can simply query the geographic database 105 of the LD centerline data. On the other hand, if the geographic database 105 stores only map data representing LGs as a boundary polygons, the routing graph generation module 501 can query the geographic database 105 for the LG boundary polygons and extract the LG centerlines accordingly.

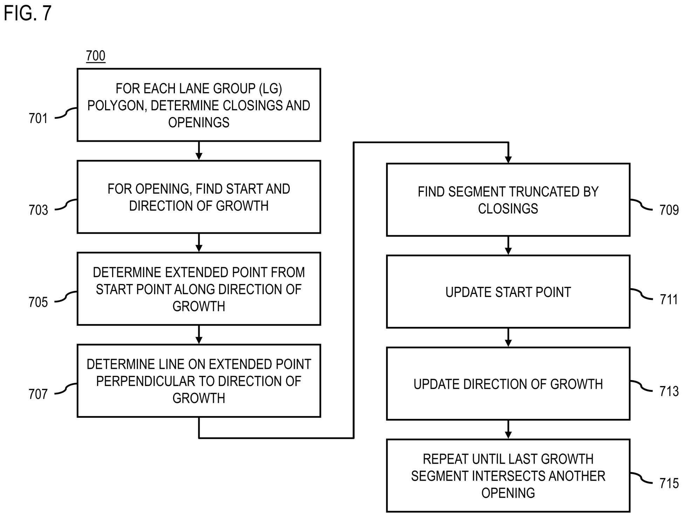

FIG. 7 is a flowchart of a process 700 for automatically extracting LG centerlines from LGs, according to one example embodiment. In various embodiments, the mapping platform 113 and/or any of the modules 501-507 may perform one or more portions of the process 700 and may be implemented in, for instance, a chip set including a processor and a memory as shown in FIG. 22. As such, the mapping platform 113 and/or any of the modules 501-507 can provide means for accomplishing various parts of the process 700, as well as means for accomplishing embodiments of other processes described herein in conjunction with other components of the system 100. Although the process 700 is illustrated and described as a sequence of steps, it is contemplated that various embodiments of the process 700 may be performed in any order or combination and need not include all of the illustrated steps.

In one embodiment, the process 700 aims to automatically generate the LG centerline for a given LG boundary polygon if the centerline is not provided by the lanes model in the geographic database 105, the lane models are not good enough (e.g., not a specified levels of accuracy), or not otherwise used by the mapping platform.

In one embodiment, the LG centerline geometries are recursively generated by growing from one opening to the other. Accordingly, in step 701, for each LG boundary polygon of the plurality of respective LG polygons being processed, the routing graph generation module 501 determines a closing segment (also referred to herein as "closing") of said each LG boundary polygon and an opening segment (also referred to herein as "opening") of said each LG boundary polygon. The closing is the boundary geometry of the LG, while opening is the connecting geometry with other LG, which allows traffic from one LG to another. In other words, the closing segment does not connect to another LG boundary polygon, and the opening segment is a connecting geometry with another LG boundary polygon and allows traffic from one LG to another LG.

The growing steps are shown as follows:
In step 703, for each opening, the routing graph generation module 501 finds or otherwise determines the start point and the direction to grow. In one embodiment, the center point of the opening segment is used as the start point, and the growth direction is from the start point to the inner of the LG boundary polygon. In step 705, the routing graph generation module 501 gets or otherwise determines an extended point from the start point along the given direction of growth. The extended point can be determined with a step size as a tunable parameter (e.g., 1 meter or any other designate step size that indicates the distance of the extended point from the start point or previous point).

In step 707, the routing graph generation module 501 gets or otherwise determines a line on the extended point perpendicular to the direction of growth. The perpendicular line, for instance, originates from the extended point towards the closing segments above and below the extended point. In step 709, the routing graph generation module 501 finds or otherwise determines the segment of the perpendicular line that is truncated by closings (i.e., determines the truncated segment).

In step 711, the routing graph generation module 501 updates the start point as the center point of the truncated segment. This updating of the start point essentially moves or grows the process along the centerline of the LG boundary polygon in discrete steps. In step 713, the routing graph generation module 501 updates the direction of growth from the previous start point to the current start point (e.g., the center point of the truncated segment). In other words, the updated direction of growth is the direction of the segment from the previous start point to the current start point.

In step 715, the routing graph generation module 501 repeats steps 705 to 713 until the last growth segment intersects the other opening of the LG boundary polygon (i.e., the routing graph generation module 501 repeats the process until the last growth segment intersects another opening segment).

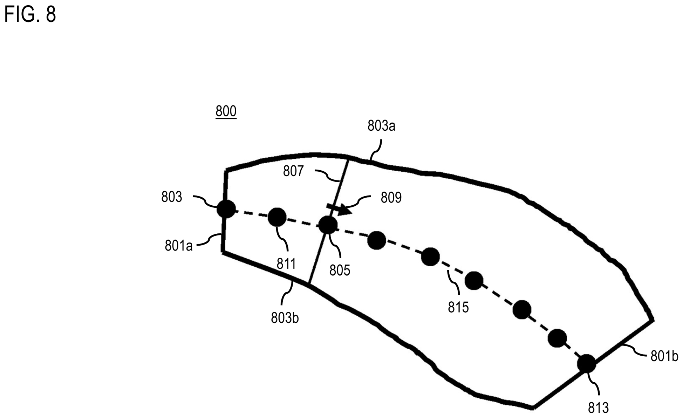

FIG. 8 is a diagram illustrating an example of LG centerline generation, according to one example embodiment. In the example, an LG boundary polygon 800 has openings 801a and 801b, and closings 803a and 803b. The start point 803 is the center of the opening segment 801a. At an extended point 805 (e.g., two steps from the start point 803), a truncated segment 807 (e.g., a segment of a line extending perpendicular to the direction of travel towards the closings 803a and 803b) is determined. The extended point 805 is the set as the center of the truncated segment, and the updated start point is set to the extended point 805. The updated direction of travel 809 is set as the direction from the previous start point 811 to the current start point (i.e., extended point 805). The process repeats until the current start point reaches the end point 813 that intersects the other opening 801b of the LG polygon 800. The LG centerline 815 is the line that connects each of the start points/extended points defined in the recursive process.

If the process 700 is performed and completed, the routing graph generation module 501 returns to the process 600 at step 603. In this step, the routing graph generation module 501 initializes an empty directed graph to store the LG routing graph being constructed. Initializing an empty directed graph involves creating a graph data structure that starts with no nodes or edges. This serves as the foundation for the routing graph. As LG centerlines are processed, nodes and edges are added to this graph, allowing for the construction of a detailed routing network.

In step 605, for each LG centerline of the plurality of LG centerlines (e.g., retrieved or extracted according to step 601), the routing graph generation module 501 determines one or more edges having a pair of node identifiers (node IDs). In other words, edges with a pair of node IDs are identified. Edges with a pair of node IDs are identified by first determining the start and end points of each LG centerline and determining the node IDs associated with the start and end points. In one embodiment, a node ID is reused if it is shared by any previously processed LG centerlines already in the LG routing graph, or otherwise a new node ID is created in the LG routing graph (i.e., the directed graph initialized in step 603). In other words, the routing graph generation module 501 determining that at least one node identifier of the pair of node identifiers is shared by at least one connected LG centerline that has been previously processed and inserted in the LG routing graph, and then reuses the at least one node identifier. As used herein, "reuse" refers to associating any new edges with a node that is already in the LG routing graph as opposed to adding the same node ID as a new node in the LG routing graph.

In one embodiment, the routing graph generation module 501 determines the edge direction based on the directions of travel (DoTs) of lanes for each LG (e.g., based on direction of travel data obtained from the geographic database 105). If a LG contains lanes of both directions, edges with either directions will be processed for insertion into the LG routing graph, or otherwise one edge with the direction will be processed.

In step 607, the routing graph generation module 501 inserts the one or more edges and the pair of node identifiers into the LG routing graph (e.g., a directed graph). To perform the insertion, the routing graph generation module 501 performs the following checks: (1) if the start node ID and end node ID are the same, the routing graph generation module 501 inserts two virtual nodes and two virtual edges to distinguish routing from either direction; and (2) if the edge exists in the routing graph, a virtual node and a virtual edge will be inserted into the edge to distinguish routing from multiple edges (e.g., note that this is generally not allowed in the normal or conventional directed graph data structures. Otherwise, the routing graph generation module 501 inserts the edge into the LG routing graph.

In other words, for each edge of the one or more edges, the routing graph generation module 501 determines that a LG of the plurality of LGs corresponding to said each edge has lanes in both directions, and inserts two virtual nodes and two virtual edges in the LG routing graph to distinguish routing from either direction of both directions based on determining that a start node identifier and an end node identifier of said each edge are the same. In addition, for each edge of the one or more edges, the routing graph generation module 501 determines that said each edge exists in the LG routing graph, and then adds a virtual node and a virtual edge to said each edge in the LG routing graph to distinguish routing from multiple edges. As used herein, a virtual node is an additional node inserted into a routing graph to distinguish routing paths. It is used when the start and end points of an edge are the same, or when multiple edges share the same start and end nodes. A virtual edge is an extra edge added between virtual nodes or existing nodes to handle these special cases such as when there are multiple directions of travel between two nodes, ensuring that routing paths are accurately represented even when dealing with self-loops or multi-edges. In summary, for each LG centerline, edges with a pair of node ids are identified, and both nodes and edges are inserted into the routing graph.

Note that there are two special edge types: self-loop edge and multi-edge. The self-loop edge has the same node for start and end, while multi-edge means multiple edges have the same pair of start and end nodes. Both edge types will have impact on how the routing is performed. The virtual nodes and virtual edges are added to address these issues.

In step 609, the routing graph generation module 501 provides the LG routing graph. In one embodiment, the LG routing graph may be used for matching to a trajectory or a directed graph representing a set of trajectories.

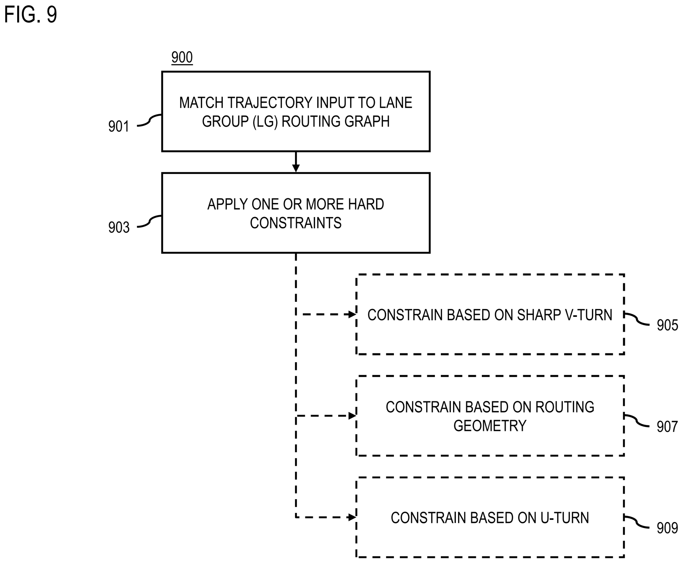

FIG. 9 is a flowchart of a process 900 for matching a trajectory input to a LG routing graph, according to one example embodiment. In various embodiments, the mapping platform 113 and/or any of the modules 501-507 may perform one or more portions of the process 900 and may be implemented in, for instance, a chip set including a processor and a memory as shown in FIG. 22. As such, the mapping platform 113 and/or any of the modules 501-507 can provide means for accomplishing various parts of the process 900, as well as means for accomplishing embodiments of other processes described herein in conjunction with other components of the system 100. Although the process 900 is illustrated and described as a sequence of steps, it is contemplated that various embodiments of the process 900 may be performed in any order or combination and need not include all of the illustrated steps.

In step 901, the map matching module 503 matches an input trajectory to the LG centerline routing graph. A "trajectory input" or simply "trajectory" refers to a sequence of geolocation points that represents the path taken by a moving object, such as a vehicle. This sequence is typically recorded by GPS devices and includes time-stamped positions that outline the movement over a specified period. In the context of mapping and routing algorithms, trajectory input is used to match the recorded path to a corresponding route in a routing graph, thereby optimizing navigation and route planning.

Given a routing graph and a trajectory input as a sequence of geolocations, the optimal sequence of LG centerlines can be identified by hidden Markov algorithm (HMM) or equivalent. However, conventional approaches based on road centerlines are not sufficient for LG centerlines. Comparing to road topologies (e.g., road centerlines as opposed to lane centerlines), the special characteristics of LG centerlines include but are not limited to:
(1) LG centerlines can share some node IDs for connectivity, but they may not be geometrically connected. In other words, their geolocations at ends can be different even though LGs are connected.
(2) LG centerlines have explicit routes to represent lane transitions, while road centerlines do not have lane information. So, they often create some common connecting point to connect traffic from different directions in the intersection areas.

Due to these special properties of LG routing graph, directly applying the existing HMM implementation will degrade matching quality in some situations. Accordingly, in step 903 the map matching module 503 can apply or otherwise integrate one or more optional hard constraints as solutions to the situations discussed below. In one embodiment, "hard constraints" refer to rules or limitations used by the map matching module 503 to enhance the accuracy and quality of matching trajectories to the LG centerline routing graph. These constraints are used to address specific issues that arise due to the unique properties of LG centerlines, such as sharp V-turns or deviations from expected straight-line paths. By enforcing these hard constraints, the mapping platform can avoid infeasible routes and ensure more precise navigation and route planning.

In optional step 905, one or more of the hard constraints include designating a transition in the sequence of LG centerlines as infeasible if the sequence of LG centerlines includes a sharp angle that is less than a threshold angle (referred to as a "sharp V-turn"). For example, a sharp V-turn is common for LG routing graph, but rarely happens for road routing graph. The transition probability relying on routing distance often has minimal impact when the sharp V-turn is included in the route. However, when the geolocations on trajectory drift towards to the wrong LG, the emission probability will become big. Tuning the parameter is a significant technical challenge since the turning angle can vary in different cases.

To address this technical challenge, the map matching module 503 adds a hard constraint on the transition: if some route includes a sharp angle, e.g., less than 15 degrees or other designated angle threshold, the route is marked as infeasible. By marking the route as infeasible, the HMM or equivalent algorithm will find the optimal path by bypassing any path that includes the infeasible transition. For routing geometry coordinates, a sliding window including three shape points can be used to compute an angle, and the minimum angle is then used to qualify the sharp V-turn. With this hard constraint, the optimal matching LG centerlines will not include sharp V-turn transitions.

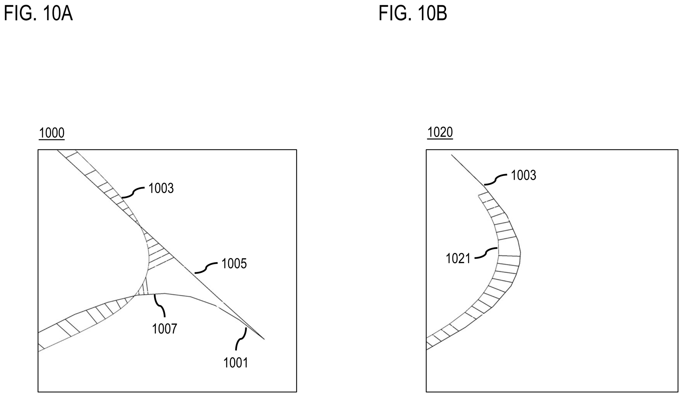

FIGs. 10A and 10B are diagrams of an example of excluding a sharp V-turn, according to one example embodiment. FIG. 10A depicts an example 1000 of a sharp V-turn 1001 resulting from HMM matching of trajectory 1003 to LG 1005 and LG 1007. The angled formed by LG 1005 and LG 1007 form the sharp V-turn 1001. In this example, it is not likely that a vehicle in reality would have made the sharp V-turn 1001. So this sharp V-turn 1001 is likely an artifact of the HMM matching. In contrast, the example 1020 of FIG. 2B illustrates a case in which the sharp V-turn 1001 of FIG. 10A has been marked as infeasible (e.g., because its angle is below the threshold angle). As a result, the HMM algorithm has matched the trajectory 1003 to a LG 1021 that does not include a sharp V-turn, which is likely to be more realistic.

In optional step 907, the shape of routing geometry during the transition between to possible LGs is penalized. In one embodiment, to implement this penalty, there are two checks:
(1) The difference between direct distance and the route distance is determined. If the route distance is at least threshold factor (e.g., 2 times) larger than direct distance, any path that includes this transition is dropped. In other words, the one or more hard constraints include eliminating a path in the sequence of LG centerlines with a route distance that is greater than a direct distance by more than a threshold factor.
(2) If the route shape is deviated from the straight line of projected points, any path including this transition is dropped. For example, the deviation is computed by finding the maximum perpendicular distance from the route geometry to the straight line. The perpendicular distance threshold is set to a designated value (e.g., 1.5 x search radius), where the factor and search radius can be set according to the use case. In one example, the factor is 1.5 and search radius is 15 meters for finding matching candidates of each geocoordinate in the trajectory input.

In optional step 909, U-turn artifacts are removed for any three consecutive matching points. One special U-turn artifact can be easily detected by looking at the matched LGs. If all three LGs are different, this means that the trajectory touches the middle LG and turns back to the third LG with short distance (e.g., within a threshold distance). The short/quick U-turn should not happen in real world, so this constraint specifically avoids generating matches in this case. In other words, the one or more hard constraints include eliminating one or more U-turn artifacts for any three consecutive matching points in the sequence of LG centerlines (e.g., that occur within a threshold distance).

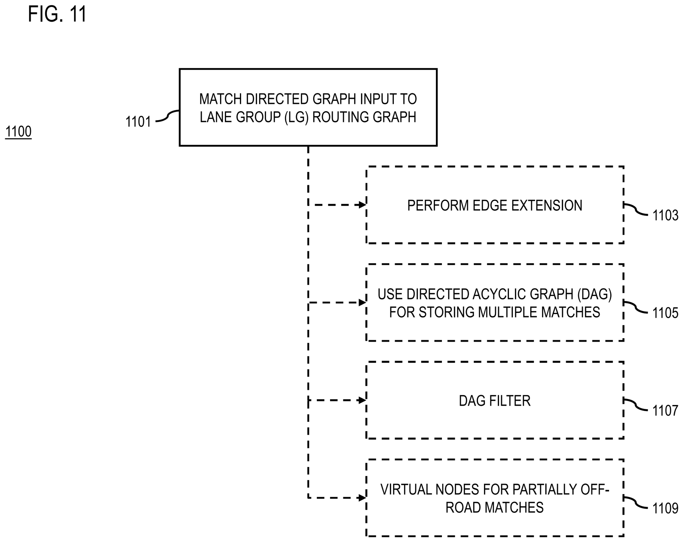

FIG. 11 is a flowchart of a process 1100 for matching a directed graph input to a LG routing graph, according to one example embodiment. In various embodiments, the mapping platform 113 and/or any of the modules 501-507 may perform one or more portions of the process 1100 and may be implemented in, for instance, a chip set including a processor and a memory as shown in FIG. 22. As such, the mapping platform 113 and/or any of the modules 501-507 can provide means for accomplishing various parts of the process 1100, as well as means for accomplishing embodiments of other processes described herein in conjunction with other components of the system 100. Although the process 1100 is illustrated and described as a sequence of steps, it is contemplated that various embodiments of the process 1100 may be performed in any order or combination and need not include all of the illustrated steps.

In step 1101, the map matching module 503 matches an input directed graph to the LG centerline routing graph. A directed graph, or digraph, is a set of vertices or nodes connected by edges, where each edge has a direction associated with it, indicating a one-way relationship from one vertex to another. This structure is often represented mathematically as a pair (V, E), where V is a set of vertices and E is a set of ordered pairs of vertices. In one embodiment, an input directed graph can represent a set of trajectories where each directed edge represents a trajectory, and its nodes represent the connections among different trajectories. In one embodiment, the input directed graph represents the vehicle path network data 101 generated from the vehicle trajectory data 103 collected from one or more of the vehicles 107 traveling over a road network and/or UE devices 109.

In one embodiment, to address the challenging problems introduced by an input directed graph including multiple matches and partial off-road matches, the map matching module 503 can perform one or more of the following optional steps.

In optional step 1103, the map matching module 503 can perform edge extension. For each edge of the input directed graph, the edge is extended from both ends along its predecessors and successors, respectively. However, enumerating all paths that contain the edge can be impractical because of all the possible permutations. In one embodiment, the various embodiments of edge extension describe herein walks along and processes the most preferred connections (e.g., top N connections) if there exists many paths. For example, the extended edge can have the smallest angle difference with that of its extended edge. In addition, the extended length can be bounded on both sides, e.g., 100 meters or any other selected distance. The edge with the extended edges forms a path that can cover multiple other edges. It not only increases the context of the current edge for LG matching, but also generates paths including extended edges which are particularly useful for efficiently gathering multiple matches. When edge extension is applied to all edges on the graph, the generated paths can cover most multiple matches since they frequently happen near connection areas. In other words, the map matching module 503 can match a direct graph input to the LG routing graph such that the matching comprises extending each edge of the directed graph input to perform and retain matching results only for an unextend portion of said each edge.

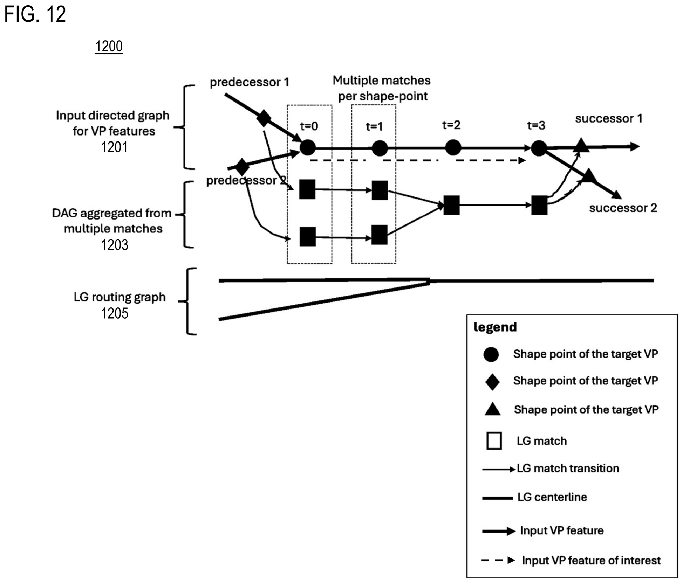

In optional step 1105, the map matching module 503 can use a directed acyclic graph (DAG) for storing multiple matches. In one embodiment, the above proposed LG matching for trajectory method (e.g., the process 900 of FIG. 9) is applied to all generated paths. The matching results are then aggregated for each edge of the directed graph input since one such edge can be composed by many generated paths and each such generated path has its optimal matching LG sequence. As the transition of matches can only exist from the current position of the input trajectory (associated to the edge) to the next position, the aggregated matches and their transitions naturally form a DAG. In addition, the connectivity of the edge to its predecessors and successors can be maintained properly according to the transitions obtained for the generated extended paths. FIG. 12 is a diagram illustrating an example 1200 of a directed acyclic graph aggregated from multiple matches, according to one example embodiment. In the illustrated embodiment, paths are generated by applying the proposed path generation method (e.g., step 1103) to an input directed graph 1201 for VP features Subsequently, all paths generated via the proposed path generation method are matched to a LG routing graph 1205 by applying the proposed LG matching method (e.g., the process 900 of FIG. 9). Finally, a DAG 1203 is inferred from multiple paths for multiple matches provided from the LG matching method.

In optional step 1107, the map matching module 503 can perform DAG filtering. In one embodiment, the LG matches stored in DAG can be noisy or inconsistent due to certain factors. One such factor is early termination during the edge extension. The matching on either beginning or end of the extended path can be possibly wrong. This introduces errors in LG matches in the DAG after incorporating the possibly wrong matches. To avoid introducing such error, the LG matches for first edge and the last edge of the extended edge are removed from DAG. As a second factor, when there are more than one predecessor or successor, the branch in DAG with no connection is removed. As a third factor, inconsistent matches can be removed. For example, due to the slightly changed context, matches can be varied, but most of them have the same LG sequence with the same predecessors and successors, one of such branches on the DAG will be kept while others are removed.

In optional step 1109, the map matching module 503 can use virtual nodes for partially off-road matches. The DAG is properly defined when all positions of the input trajectory have LG matches. For (partially) off-road trajectories, any part of positions may not have matches. To continue using the DAG, the virtual nodes for off-road matches/partial off-road matches are inserted into the DAG to make sure that the transition from empty matches to other matches or from other matches to empty matches are feasible.

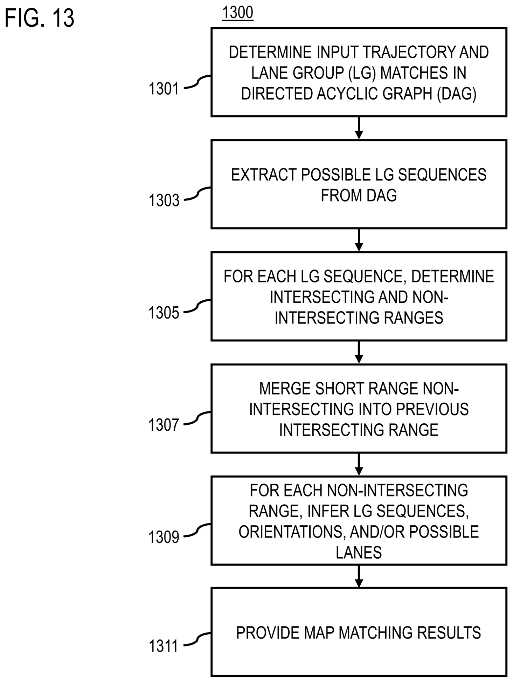

FIG. 13 is a flowchart of a process 1300 for associating lanes using LG matches based on a directed acyclic graph, according to one example embodiment. In various embodiments, the mapping platform 113 and/or any of the modules 501-507 may perform one or more portions of the process 1300 and may be implemented in, for instance, a chip set including a processor and a memory as shown in FIG. 22. As such, the mapping platform 113 and/or any of the modules 501-507 can provide means for accomplishing various parts of the process 1300, as well as means for accomplishing embodiments of other processes described herein in conjunction with other components of the system 100. Although the process 1300 is illustrated and described as a sequence of steps, it is contemplated that various embodiments of the process 1300 may be performed in any order or combination and need not include all of the illustrated steps.

In one embodiment, the process 1300 comprises a method to associate lanes using the optimal LG matches based on directed acyclic graph. LG matching can determine that an optimal LG sequence is associated to the given trajectory, but it still needs to determine which lane is associated. Most of the ambiguity of LGs near intersection areas have been addressed by the proposed LG matching using HMM. The remaining problem is how to associate the trajectory input to a sequence of LG lanes.

In real data, the input trajectory data can be very different from LG lanes. In many areas such as residential areas, LG lanes are autogenerated, so the quality is not guaranteed. Moreover, the input trajectory can behave arbitrarily like the vehicle path indicated by human driving behavior. It can drive to off-road areas such as parking lots or take U-turns on opposite lanes. In addition, the sampling rate of input trajectory also generates some difficulties such as multiple lanes in-between two consecutive sampled points and self-intersecting issues.

In one embodiment, the lane association construction algorithm uses the process 1300 to find the pair of input trajectory range and its associated LG lane range.

In step 1301, the map matching module 505 determines an input trajectory and the optimal LG matches in the DAG.

In step 1303, the association module 505 extracts all or at least a plurality of possible LG sequences from the DAG. By way of example, extracting possible LG sequences from a directed acyclic graph (DAG) involves identifying and aggregating all potential sequences of LGs that correspond to segments of an input trajectory. The extraction aims to find all valid paths within the DAG that align with the input trajectory, taking into account factors like path overlap, orientation compatibility, and intersections within lane boundaries. If the DAG contains virtual nodes, these virtual nodes will be considered as off-road, the remaining continuous on-road matches form LG sequences. If the DAG does not contain any virtual nodes, the association module 505 extracts all possible LG sequences.

In step 1305, for each LG sequence and for each LG in the LG sequence, the association module 505 finds or otherwise determines intersecting and/or non-intersecting ranges. For example, the association module 505 selects all lanes in the LG with orientation compatible with the input trajectory. The association module 505 then intersects the input trajectory with the selected lane boundary polygons, and find all intersecting ranges of the input trajectory within the polygons.

If the trajectory is self-intersecting, additional checks are used since the intersecting range can be overlapped for these ranges sharing the intersecting point. To address this ambiguity, the range with the shortest-range length can be selected. The offset is distance-based ratio from start node.

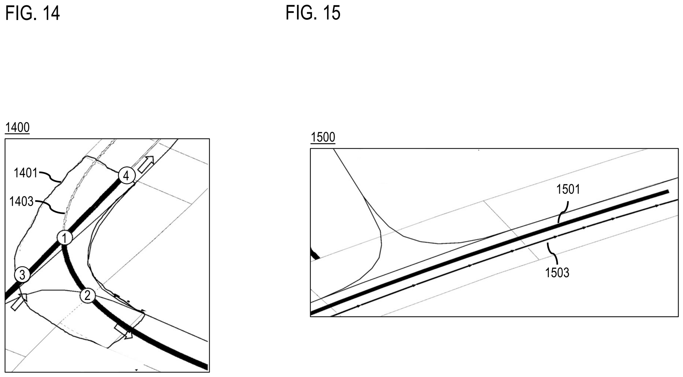

FIG. 14 illustrates an example 1400 of a self-intersecting vehicle path feature, according to one example embodiment. In this example, polygon 1401 represents a lane. The input trajectory 1403 intersects itself at point 1. From intersecting point 1, there are three overlapping ranges after the intersecting trajectory 1403 within the boundaries of the lane polygon 1401: (1) range from point 1 to point 2; (2) range from point 1 to point 3; and (3) range from point 1 to point 4. According to range length, the range from point 1 to point 2 is the shortest one. So, it is selected for the given LG.

In one embodiment, if there are multiple ranges of the input trajectory as shown in FIG. 15, they are filtered based on compatibility of the orientation of the lanes and that of VP range based on LG matches. FIG. 15 is diagram illustrating an example 1500 of providing compatible orientation of LG, according to one example embodiment. As shown, the portion 1501 of a trajectory input has a direction of travel that is compatible with the orientation of the top lane. So, it is associated to the top lane. On the other hand, the portion 1503 of the trajectory input has a direction of travel that is compatible with the orientation of the bottom lane. So, it is associated to the bottom lane. This is because the LG matching results provide the compatible orientations of the lanes in the LG to match within the given input range of the trajectory.

In step 1307, for the LG sequence, the association module 505 finds all non-intersecting ranges. For some short non-intersecting ranges, the association module 505 merges the short non-intersecting ranges with a previous intersection range. This is because the lanes from connected LGs may have some small gap. In other words, for the one or more non-intersecting ranges that art shorter than a threshold length, the association module 505 merges the one or more non-intersecting ranges with a previous intersecting range.

In step 1309, for each non-intersecting range, the association module 505 infers its interpolated LG sequences, orientations and possible lanes based on LG matches for the specified input range.

In step 1311, the output module 507 consolidates lane association results over all LG sequences in the DAG and provides the map matching results 119 including the lane association results.

In one embodiment, the output module 507 supports multiple matching output formats for providing the map matching results 119. For example, there are at least two types of outputs that can be stored: one is the LG matching with the point matches to LG centerlines, and the other is the lane associations with the range matches to lane centerlines. With respect to LG association output format, there are three conventional components: (1) on-road point match; (2) off-road point match; and (3) transition from one on-road point to the next on-road point. The point match is the matched point of the VP on LG centerlines. One difference is that the multiple matches should be stored as shown in FIG. 12. Specifically, each on-road point match will have either a transition to the next on-road point match or a termination due to off-road point match. The next on-road point can be multiple matches and include the connections to its predecessor VP and successor VP, so that matches over all possible routes are included.

With respect to lane association output format, point matches are not proper to represent the polygon representations of lanes. In one embodiment, the output module 507 considers the following variations should be considered: (1) a matched lane should have orientation compatible with the corresponding VP range; (2) the VP range can be either within or outside of the matched lane, even if it is inside a LG (e.g., referred to as on-lane or off-lane matches respectively); and (3) due to the polygon representation of lanes, it is better to have range representation instead of point matches.

As a result, in one embodiment, the output module 507 uses a new output data format for lane association consisting of the following components: (1) on-lane match range: the VP range inside a lane trimmed by the lane boundary geometry; (2) off-lane match range: the VP range outside matched lanes in between on-lane match range or off-road match range; and (3) off-road match range: the VP range formed by continuous off-road matched VP coordinates. It is noted that the off-lane match range can happen in any location of the VP.

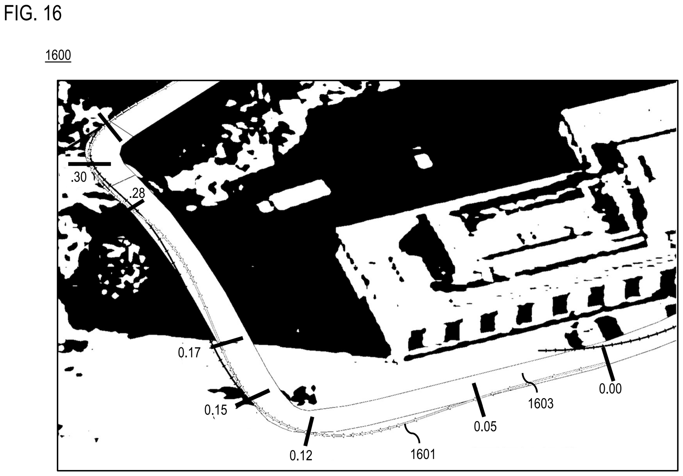

FIG. 16 is diagram illustrating an example 1600 of on-lane and off-lane match ranges, according to one example embodiment. In the illustrated embodiment, the example 1600 includes three off-lane match ranges and three on-lane match ranges for a trajectory 1601 and a lane 1603 of an LG. For example, 0-0.05 is an on-lane match range, 0.05-0.12 is an off-lane match range, 0.12-0.15 is an on-lane match range, 0.15-0.17 is an off-lane match range, 0.17-0.28 is an on-lane match range, and 0.28-0.3 is an off-lane match range. The last off-lane match range 0.28-0.3 is a transition from the lane 1603 of the LG to the lane 1603 of another LG.

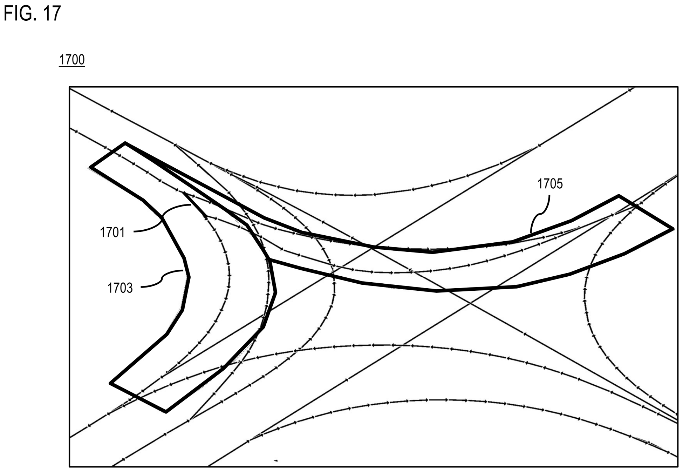

FIG. 17 is diagram illustrating an example 1700 of multiple matches, according to one example embodiment. In this example, for the highlighted VP feature 1701, there are two lanes of different groups 1703 and 1705 that are matched to VP feature 1701 due to two different routes sharing the same VP.

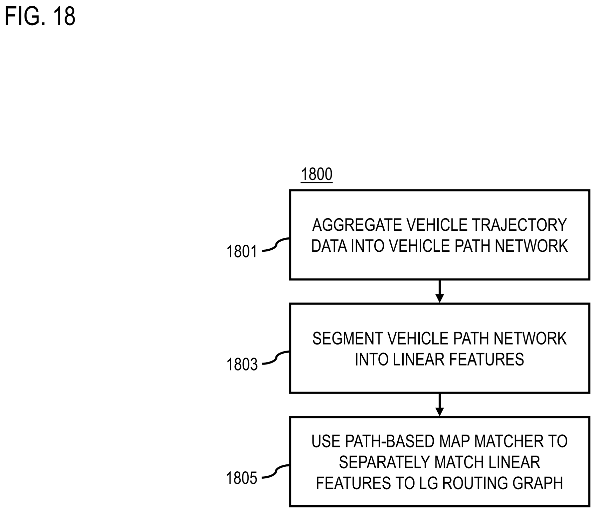

FIG. 18 is flowchart of a process 1800 for using edge extension to match to lanes of a road topology network in a digital map, according to one example embodiment. In various embodiments, the mapping platform 113 and/or any of the modules 501-507 may perform one or more portions of the process 1800 and may be implemented in, for instance, a chip set including a processor and a memory as shown in FIG. 22. As such, the mapping platform 113 and/or any of the modules 501-507 can provide means for accomplishing various parts of the process 1800, as well as means for accomplishing embodiments of other processes described herein in conjunction with other components of the system 100. Although the process 1800 is illustrated and described as a sequence of steps, it is contemplated that various embodiments of the process 1800 may be performed in any order or combination and need not include all of the illustrated steps.

In step 1801, the mapping platform 113 aggregates vehicle trajectory data 103 into a vehicle path network (e.g., vehicle path network data 101). In one embodiment, the vehicle path network is a directed graph comprising a plurality of nodes. As previously described, the aggregation process can involve several steps. First, the continuous vehicle trajectories are discretized into a series of representative points or segments, which become the nodes of the directed graph. These nodes typically correspond to key locations indicated in the vehicle trajectory data 103 such as but not limited to intersections or junctions of the multiple vehicle paths, or any point where a significant change in driving direction occurs. Next, edges are established between the nodes, representing the movement of vehicles between those points. In one embodiment, the nodes and edges can be determined by clustering, averaging, and/or the like the multiple vehicle trajectories or paths in the vehicle trajectory data 103. Each edge or linear feature signifies an aggregated driving path and includes information about the direction of travel. To further enhance the accuracy of the VP network, particularly in representing the curvature of roads, intermediate points called "shapepoints" can be added along the edges. The resulting VP network is a directed graph where each edge reflects a driving path with a specific direction, and the connectivity of the graph illustrates how these driving paths interconnect.

In step 1803, the mapping platform 113 segments the vehicle path network into a plurality of linear features. Each linear feature of the plurality of linear features connects two nodes of the plurality of nodes in the vehicle path network. In one embodiment, the vehicle path network data 101 is represented as a directed graph in which multiple edges interconnect via nodes to represent possible vehicle paths observed within travel area. As such, the directed graph is not a linear and cannot be directly input to the path-based map matcher 115 because the path-based map matcher 115 receives linear trajectories or sequences of sample location points as input. Accordingly, the mapping platform 113 segments the edges of directed graph between two nodes of the directed graph to generate a set of linear features 121 (e.g., each comprising a start node, an end node, and an edge between the start node and end node).

In step 1805, the mapping platform 113 uses a path-based map matcher (e.g., path-based map matcher 115) to separately match each linear feature of the linear features 121 to a LG routing graph to generate the map matching results 119. As discussed in the various embodiments described herein, incorporating context of the vehicle path network into each linear feature comprises extending one or both ends of each linear feature by a certain designated distance (e.g., 100 meters) via a depth-first search on the vehicle path network. In one embodiment, to process each linear feature of a directed graph through the path-based map matcher 115, each feature is treated as an independent trajectory. The linear feature, for instance, is converted into a sequence of geographic coordinates (or any other format supported by the path-based map matcher 115) and processed by the path-based map matcher 115. The path-based map matcher 115 may apply the LG matching for trajectory method (e.g., the process 900 of FIG. 9) on the linear feature, and the LG matching for trajectory method may be performed as a part of the process 1100 of FIG. 11 to yield LG matches in a DAG. The path-based map matcher 115 may perform the process 1300 and use the DAG to output the map matching results 119 (e.g., one or more intersecting and/or non-intersecting ranges for each LG in an LG sequence in the format of LG association output format or lane association output format).

By way of example, a path-based map matcher 115 is a computational technique that aims to find the most likely lanes on a digital map that correspond to a sequence of geographic coordinates or location points (e.g., linear features or vehicle trajectories). The location points can be obtained from various sources, such as GPS devices, vehicle sensors of vehicles 107, mobile phones (e.g., UEs 109), etc. The path-based map matcher 115 can use a probabilistic model, such as a hidden Markov model (HMM), to estimate the likelihood of each possible path given the location points and the map data. The HMM takes into account the distance between the location points and the map segments, the topology of the road network, the heading and speed of the vehicle, and other factors that affect the accuracy and reliability of the location data. The output of the path-based map matcher 115 is a sequence of map segments that best matches the input trajectory.

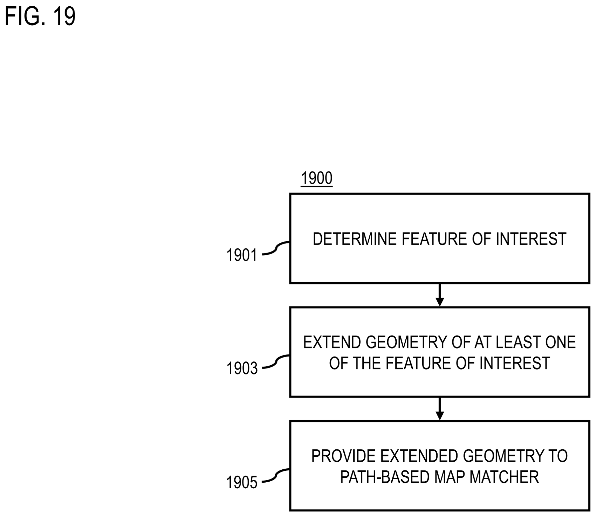

However, in some cases (e.g., in areas with complex road topology such as intersections) the edges or linear features of the vehicle path network may not have enough context to be map matched accurately. In this case, the map matching module 503 can incorporate sufficient context of the vehicle path network by extending the geometry of the linear features according to the process 1900 of FIG. 19 described below. FIG. 19 is flowchart of a process for extending linear features for matching a directed graph representation of a vehicle path to a LG routing graph, according to one example embodiment. In one embodiment, step 1103 of the process 1100 of FIG. 11 may be performed based on the process 1900 of FIG. 19. In various embodiments, the map matching module 503 and/or any other component of the mapping platform 113 may perform one or more portions of the process 1900. As such, the map matching module 503 and/or mapping platform 113 can provide means for accomplishing various parts of the process 1900. Although the process 1900 is illustrated and described as a sequence of steps, it is contemplated that various embodiments of the process 1900 may be performed in any order or combination and need not include all of the illustrated steps.

In one embodiment, the various embodiments of the process 1900 describe techniques for addressing the abovementioned issues related to the context for more accurate path-based map matching, such as for path-based map matchers that use a hidden Markov model or equivalent probabilistic model. More specifically, the various embodiments of the process 1900 use a wrapper-based approach for overcoming insufficient context for an individual VP feature (e.g., linear feature or edge of the directed graph). For example, the map matching module 503 can create a wrapper around the path-based map matcher 115, and concentrate on extracting proper VP geometries from a given VP network to include sufficient context for the path-based map matcher 115 to match each VP feature of interest to the reference map. The process 1900 comprises the following steps.

In step 1901, the map matching module 503 determines a feature of interest from among the plurality of linear features. The feature of interest, for instance, represents a linear feature that is selected for map matching according to the various embodiments described herein. It is contemplated that the feature of interest can be any one or more of the plurality of linear features segmented from the directed graph.

In step 1903, the map matching module 503 extends a geometry of at least one end of the feature of interest. In other words, given a VP feature of interest (e.g., linear feature), the map matching module 503 extends its geometry from one or both ends to a certain distance (e.g., 100 meters). In one embodiment, the extension can be performed via a depth-first search on the VP network (e.g., directed graph). A depth-first search, for instance, is an algorithm for traversing or searching a directed graph. It starts at one or both of the nodes or features of interest and explores as far as possible along each branch of the directed before backtracking.

In one embodiment, the selection preference of each extension step at each end can be performed on a curvature-based approach. In the curvature-based approach, the smoothest one of all VP features connected to the end is first chosen. The smoothness can be measured by angle differences between two connected VP features. The smaller the angle difference is, the smoother the connection of two features is. In other words, the geometry of the at least one end of the feature of interest is extended by selecting a smoothest linear feature connected to the at least one end that has the least angle difference between the feature of interest.

In step 1905, the map matching module 503 run the path-based map matcher 115 on the extended geometry to generate the corresponding map matching outputs or results for the feature of interest. The map matching module 503, for instance, provides the extended geometry of the feature of interest as an input to the path-based map matcher 115 to generate the map matching results for the feature of interest.

Some example use cases for matching directed graphs to lanes of road topologies include but are not limited to:
(1) Detecting changes in road network structure over time by comparing the directed graph extracted from VP features with the existing lanes of road topology stored in the geographic database. This can help update the map data and provide accurate routing and navigation services.
(2) Analyzing the connectivity and geometry of road intersections by aligning the directed graph derived from intersection boundaries with the corresponding lanes of road topology. This can help infer the traffic rules, turning restrictions, lane configurations, and signalization of the intersections.
(3) Enhancing the localization and positioning of vehicles by matching the directed graph obtained from vehicle sensors (e.g., camera, LiDAR, GPS) with the lanes of the road topology of the surrounding area. This can help improve the accuracy and robustness of video odometry and other localization methods.
(4) Controlling vehicles based on map data updated according to the various embodiments described herein.
(5) Dynamically updating a location-based user interface (e.g., mapping user interface) based on map matching results (e.g., showing real-time vehicle trajectories, locations, etc.).

Returning to FIG. 1, as shown and discussed above, the system 100 includes the mapping platform 113 for matching directed graph representations of vehicle paths to a road topology network in digital map data. In one embodiment, the mapping platform 113 has connectivity or access to one or more databases for storing the vehicle path network data 101, vehicle trajectory data 103, linear features 121, and/or map matching results 119 determined according to the various embodiments described herein, and as well as a geographic database 105 for retrieving mapping data and/or related attributes for map matching. In one embodiment, the geographic database 105 can include electronic or digital representations of mapped geographic features mapped or updated based on the map matching results 119. In one embodiment, the mapping platform 113 has connectivity over a communication network 123 to the services platform 125 that provides one or more services 127. By way of example, the services 127 may be third-party services that rely on location-based services created or developed based on the map matching results 119, vehicle path network data 101, linear features 121, etc. generated according to the various embodiments described herein. By way of example, the services 127 include, but are not limited to, autonomous/semi-autonomous vehicle operation, mapping services, navigation services, travel planning services, notification services, social networking services, content (e.g., audio, video, images, etc.) provisioning services, application services, storage services, contextual information determination services, location-based services, information-based services (e.g., weather, news, etc.), etc. In one embodiment, the services 127 uses the output of the mapping platform 113.

In one embodiment, the mapping platform 113 may be a platform with multiple interconnected components. The mapping platform 113 may include multiple servers, intelligent networking devices, computing devices, components, and corresponding software for automated detection and/or characterization of road intersections. In addition, it is noted that the mapping platform 113 may be a separate entity of the system 100, a part of the one or more services 127, a part of the services platform 125, or included within the vehicles 107 and/or UEs 109.

In one embodiment, content providers 129a-129m (also collectively referred to as content providers 129) may provide content or data (e.g., including geographic data, vehicle trajectory data, vehicle path network data, etc.) to the mapping platform 113, the services platform 125, the services 127, and/or the vehicles 107. The content provided may also include any type of content, lane level road topology data, sensor data, map content, textual content, audio content, video content, image content, etc. used for map matching. In one embodiment, the content providers 129 may also store content associated with the mapping platform 113, geographic database 105, services platform 125, services 127, and/or vehicle 107. In another embodiment, the content providers 129 may manage access to a central repository of data, and offer a consistent, standard interface to data, such as a repository of the geographic database 105.

In one optional embodiment, the vehicles 107 and/or UEs 109 are configured with various sensors 111 for generating or collecting sensor observations (e.g., for processing by the mapping platform 113), related geographic data, etc. In one embodiment, the sensed data represents sensor data associated with a geographic location or coordinates at which the sensor data was collected to detect road boundaries of an intersection. In this way, the sensor data can act as observation data that can be processed using mesh triangulation according to the various embodiments described herein. By way of example, the sensors may include a global positioning sensor for gathering location data (e.g., GPS), a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data (e.g., the camera sensors may automatically capture road boundaries, road sign information, images of road obstructions, etc. for analysis), LiDAR, radar, an audio recorder for gathering audio data, velocity sensors mounted on steering wheels of the vehicles, switch sensors for determining whether one or more vehicle switches are engaged, and the like.

In another optional embodiment, the communication network 123 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), 5G New Radio Networks, Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

By way of example, the mapping platform 113, services platform 125, services 127, vehicle 107, UE 109, and/or content providers 129 optionally communicate with each other and other components of the system 100 using well known, new or still developing protocols. In this context, a protocol includes a set of rules defining how the network nodes within the communication network 123 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a datalink (layer 2) header, an internetwork (layer 3) header and a transport (layer 4) header, and various application (layer 5, layer 6 and layer 7) headers as defined by the OSI Reference Model.

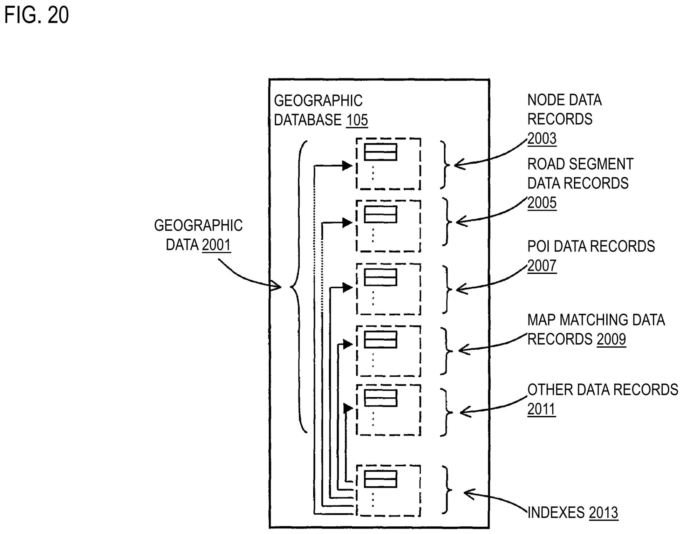

FIG. 20 is a diagram of the geographic database 105, according to one embodiment. In one embodiment, the geographic database 105 includes geographic data 2001 used for (or configured to be compiled to be used for) mapping and/or navigation-related services, such as for video odometry based on the parametric representation of signs include, e.g., encoding and/or decoding parametric representations into object models of signs. In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 105.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 105 follows certain conventions. For example, links do not cross themselves and do not cross each other except at a node. Also, there are no duplicated shape points, nodes, or links. Two links that connect each other have a common node. In the geographic database 105, overlapping geographic features are represented by overlapping polygons. When polygons overlap, the boundary of one polygon crosses the boundary of the other polygon. In the geographic database 105, the location at which the boundary of one polygon intersects the boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 105 includes node data records 2003, road segment or link data records 2005, POI data records 2007, map matching data records 2009, other records 2011, and indexes 2013, for example. More, fewer, or different data records can be provided. In one embodiment, additional data records (not shown) can include cartographic ("carto") data records, routing data, and maneuver data. In one embodiment, the indexes 2013 may improve the speed of data retrieval operations in the geographic database 105. In one embodiment, the indexes 2013 may be used to quickly locate data without having to search every row in the geographic database 105 every time it is accessed. For example, in one embodiment, the indexes 2013 can be a spatial index of the polygon points associated with stored feature polygons.

In exemplary embodiments, the road segment data records 2005 are links or segments representing roads, streets, or paths, as can be used in the calculated route or recorded route information for determination of one or more personalized routes. The node data records 2003 are end points (such as intersections) corresponding to the respective links or segments of the road segment data records 2005. The road link data records 2005 and the node data records 2003 represent a road network, such as used by vehicles, cars, and/or other entities. Alternatively, the geographic database 105 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 105 can include data about the POIs and their respective locations in the POI data records 2007. The geographic database 105 can also include data about places, such as cities, towns, or other communities, and other geographic features, such as bodies of water, mountain ranges, etc. Such place or feature data can be part of the POI data records 2007 or can be associated with POIs or POI data records 2007 (such as a data point used for displaying or representing a position of a city).

In one embodiment, the geographic database 105 can also include map matching data records 2009 for storing vehicle trajectory data 103, vehicle path network data 101, linear features 121, map matching results 119, and/or any related data generated or used according to the various embodiments described herein. In one embodiment, the map matching data records 2009 can be associated with one or more of the node records 2003, road segment records 2005, and/or POI data records 2007 to associate the map matching results 119 with specific geographic locations. In this way, the map matching results 119 can also be associated with the characteristics or metadata of the corresponding records 2003, 2005, and/or 2007.

In one embodiment, the geographic database 105 can be maintained by the content provider 129 in association with the services platform 125 (e.g., a map developer). The map developer can collect geographic data to generate and enhance the geographic database 105. There can be different ways used by the map developer to collect data. These ways can include obtaining data from other sources, such as municipalities or respective geographic authorities. In addition, the map developer can employ field personnel to travel by vehicle (e.g., vehicle) along roads throughout the geographic region to observe features and/or record information about them, for example. Also, remote sensing, such as aerial or satellite photography, can be used.

The geographic database 105 can be a master geographic database stored in a format that facilitates updating, maintenance, and development. For example, the master geographic database or data in the master geographic database can be in an Oracle spatial format or other spatial format, such as for development or production purposes. Map layers may be utilized. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a vehicle 107, for example. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for matching to lanes of a road topology network in digital map data may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

Additionally, as used herein, the term 'circuitry' may refer to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular device, other network device, and/or other computing device.

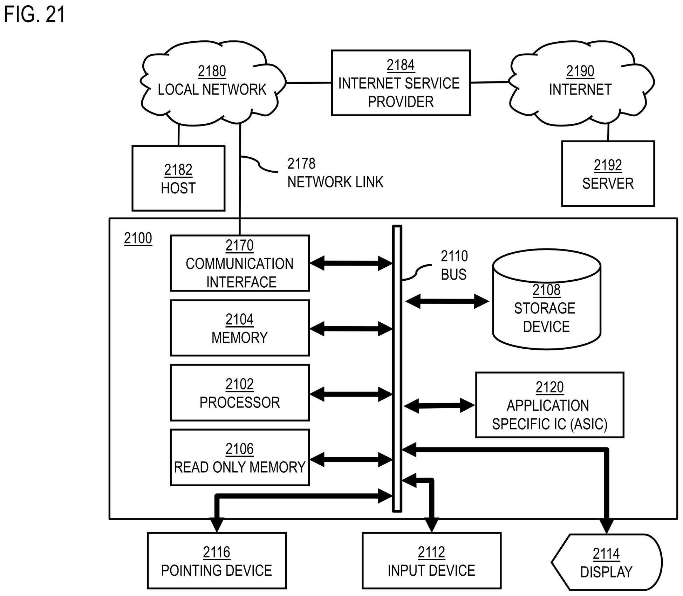

FIG. 21 illustrates a computer system 2100 upon which an embodiment of the invention may be implemented. Computer system 2100 is programmed (e.g., via computer program code or instructions) to match to lanes of a road topology network in digital map data as described herein and includes a communication mechanism such as a bus 2110 for passing information between other internal and external components of the computer system 2100. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 2110 includes one or more parallel conductors of information so that information is transferred quickly among devices coupled to the bus 2110. One or more processors 2102 for processing information are coupled with the bus 2110.

A processor 2102 performs a set of operations on information as specified by computer program code related to matching to lanes of a road topology network in digital map data. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 2110 and placing information on the bus 2110. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 2102, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 2100 also includes a memory 2104 coupled to bus 2110. The memory 2104, such as a random access memory (RAM) or other dynamic storage device, stores information including processor instructions for matching to lanes of a road topology network in digital map data. Dynamic memory allows information stored therein to be changed by the computer system 2100. RAM allows a unit of information stored at a location called a memory address to be stored and retrieved independently of information at neighboring addresses. The memory 2104 is also used by the processor 2102 to store temporary values during execution of processor instructions. The computer system 2100 also includes a read only memory (ROM) 2106 or other static storage device coupled to the bus 2110 for storing static information, including instructions, that is not changed by the computer system 2100. Some memory is composed of volatile storage that loses the information stored thereon when power is lost. Also coupled to bus 2110 is a non-volatile (persistent) storage device 2108, such as a magnetic disk, optical disk or flash card, for storing information, including instructions, that persists even when the computer system 2100 is turned off or otherwise loses power.

Information, including instructions for matching to lanes of a road topology network in digital map data, is provided to the bus 2110 for use by the processor from an external input device 2112, such as a keyboard containing alphanumeric keys operated by a human user, or a sensor. A sensor detects conditions in its vicinity and transforms those detections into physical expression compatible with the measurable phenomenon used to represent information in computer system 2100. Other external devices coupled to bus 2110, used primarily for interacting with humans, include a display device 2114, such as a cathode ray tube (CRT) or a liquid crystal display (LCD), or plasma screen or printer for presenting text or images, and a pointing device 2116, such as a mouse or a trackball or cursor direction keys, or motion sensor, for controlling a position of a small cursor image presented on the display 2114 and issuing commands associated with graphical elements presented on the display 2114. In some embodiments, for example, in embodiments in which the computer system 2100 performs all functions automatically without human input, one or more of external input device 2112, display device 2114 and pointing device 2116 is omitted.

In the illustrated embodiment, special purpose hardware, such as an application specific integrated circuit (ASIC) 2120, is coupled to bus 2110. The special purpose hardware is configured to perform operations not performed by processor 2102 quickly enough for special purposes. Examples of application specific ICs include graphics accelerator cards for generating images for display 2114, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 2100 also includes one or more instances of a communications interface 2170 coupled to bus 2110. Communication interface 2170 provides a one-way or two-way communication coupling to a variety of external devices that operate with their own processors, such as printers, scanners and external disks. In general the coupling is with a network link 2178 that is connected to a local network 2180 to which a variety of external devices with their own processors are connected. For example, communication interface 2170 may be a parallel port or a serial port or a universal serial bus (USB) port on a personal computer. In some embodiments, communications interface 2170 is an integrated services digital network (ISDN) card or a digital subscriber line (DSL) card or a telephone modem that provides an information communication connection to a corresponding type of telephone line. In some embodiments, a communication interface 2170 is a cable modem that converts signals on bus 2110 into signals for a communication connection over a coaxial cable or into optical signals for a communication connection over a fiber optic cable. As another example, communications interface 2170 may be a local area network (LAN) card to provide a data communication connection to a compatible LAN, such as Ethernet. Wireless links may also be implemented. For wireless links, the communications interface 2170 sends or receives or both sends and receives electrical, acoustic or electromagnetic signals, including infrared and optical signals, that carry information streams, such as digital data. For example, in wireless handheld devices, such as mobile telephones like cell phones, the communications interface 2170 includes a radio band electromagnetic transmitter and receiver called a radio transceiver. In certain embodiments, the communications interface 2170 enables connection to the communication network 123 for matching to lanes of a road topology network in digital map data.

The term computer-readable medium is used herein to refer to any medium that participates in providing information to processor 2102, including instructions for execution. Such a medium may take many forms, including, but not limited to, non-volatile media, volatile media and transmission media. Non-volatile media include, for example, optical or magnetic disks, such as storage device 2108. Volatile media include, for example, dynamic memory 2104. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 2178 typically provides information communication using transmission media through one or more networks to other devices that use or process the information. For example, network link 2178 may provide a connection through local network 2180 to a host computer 2182 or to equipment 2184 operated by an Internet Service Provider (ISP). ISP equipment 2184 in turn provides data communication services through the public, world-wide packet-switching communication network of networks now commonly referred to as the Internet 2190.

A computer called a server host 2192 connected to the Internet hosts a process that provides a service in response to information received over the Internet. For example, server host 2192 hosts a process that provides information representing video data for presentation at display 2114. It is contemplated that the components of system can be deployed in various configurations within other computer systems, e.g., host 2182 and server 2192.

FIG. 22 illustrates a chip set 2200 upon which an embodiment of the invention may be implemented. Chip set 2200 is programmed to match to lanes of a road topology network in digital map data as described herein and includes, for instance, the processor and memory components described with respect to FIG. 21 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 2200 includes a communication mechanism such as a bus 2201 for passing information among the components of the chip set 2200. A processor 2203 has connectivity to the bus 2201 to execute instructions and process information stored in, for example, a memory 2205. The processor 2203 may include one or more processing cores with each core configured to perform independently. A multi-core processor enables multiprocessing within a single physical package. Examples of a multi-core processor include two, four, eight, or greater numbers of processing cores. Alternatively or in addition, the processor 2203 may include one or more microprocessors configured in tandem via the bus 2201 to enable independent execution of instructions, pipelining, and multithreading. The processor 2203 may also be accompanied with one or more specialized components to perform certain processing functions and tasks such as one or more digital signal processors (DSP) 2207, or one or more application-specific integrated circuits (ASIC) 2209. A DSP 2207 typically is configured to process real-world signals (e.g., sound) in real time independently of the processor 2203. Similarly, an ASIC 2209 can be configured to perform specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 2203 and accompanying components have connectivity to the memory 2205 via the bus 2201. The memory 2205 includes both dynamic memory (e.g., RAM, magnetic disk, writable optical disk, etc.) and static memory (e.g., ROM, CD-ROM, etc.) for storing executable instructions that when executed perform the inventive steps described herein to match to lanes of a road topology network in digital map data. The memory 2205 also stores the data associated with or generated by the execution of the inventive steps.

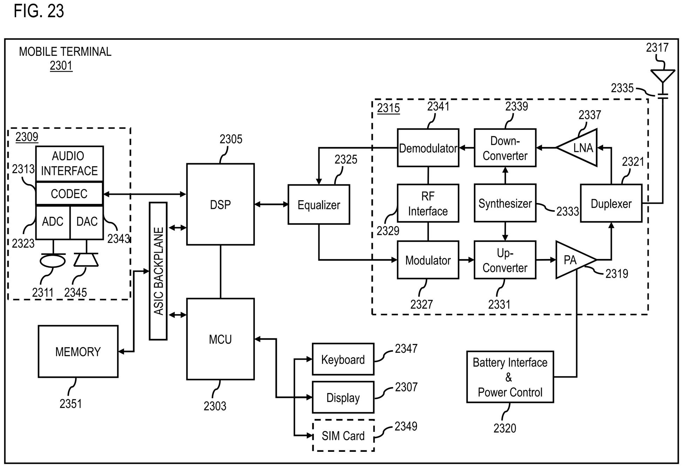

FIG. 23 is a diagram of exemplary components of a mobile terminal (e.g., handset) capable of operating in the system of FIG. 1, according to one embodiment. Generally, a radio receiver is often defined in terms of front-end and back-end characteristics. The front end of the receiver encompasses all of the Radio Frequency (RF) circuitry whereas the back end encompasses all of the base-band processing circuitry. Pertinent internal components of the telephone include a Main Control Unit (MCU) 2303, a Digital Signal Processor (DSP) 2305, and a receiver/transmitter unit including a microphone gain control unit and a speaker gain control unit. A main display unit 2307 provides a display to the user in support of various applications and mobile station functions that offer automatic contact matching. An audio function circuitry 2309 includes a microphone 2311 and microphone amplifier that amplifies the speech signal output from the microphone 2311. The amplified speech signal output from the microphone 2311 is fed to a coder/decoder (CODEC) 2313.

A radio section 2315 amplifies power and converts frequency in order to communicate with a base station, which is included in a mobile communication system, via antenna 2317. The power amplifier (PA) 2319 and the transmitter/modulation circuitry are operationally responsive to the MCU 2303, with an output from the PA 2319 coupled to the duplexer 2321 or circulator or antenna switch, as known in the art. The PA 2319 also couples to a battery interface and power control unit 2320.

In use, a user of mobile station 2301 speaks into the microphone 2311 and his or her voice along with any detected background noise is converted into an analog voltage. The analog voltage is then converted into a digital signal through the Analog to Digital Converter (ADC) 2323. The control unit 2303 routes the digital signal into the DSP 2305 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, 5G New Radio networks, code division multiple access (CDMA), wireless fidelity (WiFi), satellite, and the like.

The encoded signals are then routed to an equalizer 2325 for compensation of any frequency-dependent impairments that occur during transmission though the air such as phase and amplitude distortion. After equalizing the bit stream, the modulator 2327 combines the signal with a RF signal generated in the RF interface 2329. The modulator 2327 generates a sine wave by way of frequency or phase modulation. In order to prepare the signal for transmission, an up-converter 2331 combines the sine wave output from the modulator 2327 with another sine wave generated by a synthesizer 2333 to achieve the desired frequency of transmission. The signal is then sent through a PA 2319 to increase the signal to an appropriate power level. In practical systems, the PA 2319 acts as a variable gain amplifier whose gain is controlled by the DSP 2305 from information received from a network base station. The signal is then filtered within the duplexer 2321 and optionally sent to an antenna coupler 2335 to match impedances to provide maximum power transfer. Finally, the signal is transmitted via antenna 2317 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 2301 are received via antenna 2317 and immediately amplified by a low noise amplifier (LNA) 2337. A down-converter 2339 lowers the carrier frequency while the demodulator 2341 strips away the RF leaving only a digital bit stream. The signal then goes through the equalizer 2325 and is processed by the DSP 2305. A Digital to Analog Converter (DAC) 2343 converts the signal and the resulting output is transmitted to the user through the speaker 2345, all under control of a Main Control Unit (MCU) 2303-which can be implemented as a Central Processing Unit (CPU) (not shown).

The MCU 2303 receives various signals including input signals from the keyboard 2347. The keyboard 2347 and/or the MCU 2303 in combination with other user input components (e.g., the microphone 2311) comprise a user interface circuitry for managing user input. The MCU 2303 runs a user interface software to facilitate user control of at least some functions of the mobile station 2301 to match to lanes of a road topology network in digital map data. The MCU 2303 also delivers a display command and a switch command to the display 2307 and to the speech output switching controller, respectively. Further, the MCU 2303 exchanges information with the DSP 2305 and can access an optionally incorporated SIM card 2349 and a memory 2351. In addition, the MCU 2303 executes various control functions required of the station. The DSP 2305 may, depending upon the implementation, perform any of a variety of conventional digital processing functions on the voice signals. Additionally, DSP 2305 determines the background noise level of the local environment from the signals detected by microphone 2311 and sets the gain of microphone 2311 to a level selected to compensate for the natural tendency of the user of the mobile station 2301.

The CODEC 2313 includes the ADC 2323 and DAC 2343. The memory 2351 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 2351 may be, but not limited to, a single memory, CD, DVD, ROM, RAM, EEPROM, optical storage, or any other non-volatile or non-transitory storage medium capable of storing digital data.

An optionally incorporated SIM card 2349 carries, for instance, important information, such as the cellular phone number, the carrier supplying service, subscription details, and security information. The SIM card 2349 serves primarily to identify the mobile station 2301 on a radio network. The card 2349 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising:
determining a plurality of lane group centerlines respectively representing a plurality of lane groups of a road network in a geographic database;
for each lane group centerline of the plurality of lane group centerlines, determining one or more edges having a pair of node identifiers;
inserting the one or more edges and the pair of node identifiers into a lane group routing graph, wherein the lane group routing graph is a directed graph;
matching an input directed graph to the lane group routing graph, wherein the input directed graph represents a set of trajectories; and
providing a map matching result based on the matching.

2. The method of claim 1, further comprising:
determining that at least one node identifier of the pair of node identifiers is shared by at least one connected lane group centerline that has been previously processed and inserted in the lane group routing graph; and
reusing the at least one node identifier.

3. The method of claim 1, further comprising:
determining one or more edge directions of the one or more edges based on direction of travel data of each lane group centerline.

4. The method of claim 1, further comprising:
for each edge of the one or more edges, determining that a lane group of the plurality of lane groups corresponding to said each edge has lanes in both directions; and
inserting two virtual nodes and two virtual edges in the lane group routing graph to distinguish routing from either direction of both directions based on determining that a start node identifier and an end node identifier of said each edge are the same.

5. The method of claim 1, further comprising:
for each edge of the one or more edges, determining that said each edge exists in the lane group routing graph; and
adding a virtual node and a virtual edge to said each edge in the lane group routing graph to distinguish routing from multiple edges.

6. The method of claim 1, wherein the plurality of lane group centerlines are represented in the geographic database as a plurality of respective lane group boundary polygons, the method further comprising:
for each lane group boundary polygon of the plurality of respective lane group polygons, determining a closing segment of said each lane group boundary polygon, wherein the closing segment does not connect to another lane group boundary polygon; and an opening segment of said each lane group boundary, wherein the opening segment is a connecting geometry with another lane group boundary polygon and allows traffic from one lane group to another lane group.

7. The method of claim 6, further comprising:
for the opening segment, determining a start point and a direction of growth, wherein a center point of the opening segment is used as the start point, and wherein the growth direction is from the start point to an inner of said each lane group boundary polygon.

8. The method of claim 7, further comprising:
determining an extended point from the start point along the direction of growth with a stepwise tunable parameter;
determining a line on the extended point perpendicular to the direction of growth;
determining a truncated segment of the line truncated by the closing segment and/or another closing segment;
updating the start point as another center point of the truncated segment;
updating the direction of growth from a previous start point to a current start point; and
repeating until a last growth segment intersects another opening segment.

9. The method of claim 1, wherein the matching comprises:
matching a trajectory of the set of trajectories to the lane group routing graph to determine a sequence of lane group centerlines represented in the lane group routing corresponding to the trajectory; and
applying one or more hard constraints to matching the trajectory.

10. The method of claim 9, wherein the one or more hard constraints include one or more of:
designating a transition in the sequence of lane group centerlines as infeasible if the sequence of lane group centerlines includes a sharp angle that is less than a threshold angle;
eliminating a path in the sequence of lane group centerlines with a route distance that is greater than a direct distance by more than a threshold factor;
eliminating a path in the sequence of lane group centerlines with a route shape that deviates from a straight line of projected points by more than a threshold value; and
eliminating one or more U-turn artifacts for any three consecutive matching points in the sequence of lane group centerlines.

11. The method of claim 1,
wherein the matching comprises one or more of:
extending each edge of the directed graph, and wherein the matching results are provided only for an unextend portion of said each edge; and
storing multiple matches from the matching as a directed acyclic graph.

12. The method of claim 1, wherein the matching comprises storing multiple matches from the matching as a directed acyclic graph and the providing comprises:
extracting a plurality of possible lane group sequences from the directed acyclic graph;
for each lane group sequence of the plurality of possible lane group sequences and for each lane group in the said each lane group sequence, determining one or more intersecting ranges and one or more non-intersecting ranges;
for the one or more non-intersecting ranges that are shorter than a threshold length, merging the one or more non-intersecting ranges with a previous intersecting range; and
for each non-intersecting range of the one or more intersecting ranges, inferring its interpolated lane group sequences, orientations, possible lanes, or a combination thereof based on lane group matches; and
providing the map matching result including the one or more intersecting ranges, the one or more non-intersecting ranges, or a combination thereof.

13. The method of claim 1, wherein the matching comprises storing multiple matches from the matching as a directed acyclic graph and wherein one or more virtual nodes for partial off-road matches are inserted into the directed acyclic graph to make a transition from empty matches to other matches or from other matches to empty matches feasible.

14. An apparatus comprising:
at least one processor; and
at least one memory including computer program code for one or more programs,
the at least one memory and the computer program code configured to, with the at least one processor, cause the apparatus to:
determine a plurality of lane group centerlines respectively representing a plurality of lane groups of a road network in a geographic database;
for each lane group centerline of the plurality of lane group centerlines, determine one or more edges having a pair of node identifiers;
insert the one or more edges and the pair of node identifiers into a lane group routing graph, wherein the lane group routing graph is a directed graph;
match an input directed graph to the lane group routing graph, wherein the input directed graph represents a set of trajectories; and
provide a map matching result based on the matching.

15. A non-transitory computer-readable storage medium, carrying one or more sequences of one or more instructions which, when executed by one or more processors, cause an apparatus to perform:
determining a plurality of lane group centerlines respectively representing a plurality of lane groups of a road network in a geographic database;
for each lane group centerline of the plurality of lane group centerlines, determining one or more edges having a pair of node identifiers;
inserting the one or more edges and the pair of node identifiers into a lane group routing graph, wherein the lane group routing graph is a directed graph; and
match an input directed graph to the lane group routing graph, wherein the input directed graph represents a set of trajectories; and
provide a map matching result based on the matching.
